# EUROPEAN PATENT APPLICATION

(11) **EP 4 391 324 A1**
(43) Date of publication of application: **26.06.2024**
(21) Application number: 23216687.6
(22) Date of filing: 14.12.2023
(51) Int. Cl.: H02K 5/20, H02K 9/197, H02K 3/24

(54) **ELECTRIC MOTOR**

(30) Priority: 19.12.2022 JP 2022202625
(71) Applicant: Yamaha Hatsudoki Kabushiki Kaisha, Iwata-shi, Shizuoka 438-8501 (JP)
(72) Inventor: Ito, Jin, Iwata-shi, Shizuoka 438-8501 (JP); Yamato, Yasuhiro, Iwata-shi, Shizuoka 438-8501 (JP)
(74) Representative: Grünecker Patent- und Rechtsanwälte PartG mbB

(57) **Abstract**

In an electric motor 10 a first coil end accommodation channel F11 includes a stator cooling channel F10 defined inside an inner surface of a first housing cover portion 22. A housing cooling channel F20 includes a channel formed in a housing cylindrical portion 21 and a channel formed in the first housing cover portion 22. This structure serves to efficiently cool coolant flowing through a coil end.

## Description

The present invention relates to an electric motor.

A stator of an electric motor includes a coil and a stator core to which the coil is attached. When the stator is heated to a high temperature by the heat emitted from the coil, the heat affects the magnetic flux formed in the electric motor and lowers the operation efficiency. As such, a need has developed for a structure for cooling the stator. The vehicles such as electric vehicles and hybrid vehicles use high-output electric motors, and thus such measures against heat are particularly important. JP 2022-030829 A describes the structure in which coolant is circulated in the coil end and also the channel of the coolant is formed in the housing. The housing heated through the stator core is also cooled by the coolant.

The coolant heated by the heat from the stator dissipates heat in the heat exchanger, such as a radiator and an oil cooler provided outside the electric motor. The electric motor with a large output generates a greater amount of heat from the coil end, and thus is required to efficiently dissipate the coolant.

It is the object of the present invention to provide an electric motor having large output and efficient cooling. According to the present invention said object is solved by an electric motor having the features of independent claim 1. Preferred embodiments are laid down in the dependent claims.
(1) An electric motor proposed in the present disclosure includes a motor body including a rotor that is rotatable around an axis and a stator that is opposed to the rotor in a radial direction, the stator including a coil, the coil including a first coil end in an axial direction; a housing that houses the motor body; a stator cooling channel that is defined inside an inner surface of the housing, is filled with coolant, and includes a first coil end accommodation channel, the first coil end accommodation channel accommodating the first coil end; and a housing cooling channel that includes a channel formed between the inner surface and an outer surface of the housing and is filled with coolant. The housing includes a housing cylindrical portion positioned outward of the motor body in a radial direction and a first housing cover portion disposed on one side in the axial direction with respect to the motor body. The first coil end accommodation channel is defined inside an inner surface of the first housing cover portion. The housing cooling channel includes a channel formed in the housing cylindrical portion and a channel formed in the first housing cover portion.
   According to the electric motor of the present disclosure, coolant flowing in the first coil end accommodation channel can be cooled by coolant flowing in the housing cooling channel formed in the first housing cover portion.
(2) In the electric motor according to (1), the channel formed in the first housing cover portion of the housing cooling channel may be positioned outward of the first coil end accommodation channel in the radial direction. With this structure, the coolant in the first coil end accommodation channel can be cooled more effectively.
(3) In the electric motor according to (1) or (2), the first coil end accommodation channel is formed around the axis, the channel formed in the first housing cover portion of the housing cooling channel is formed around the axis, is positioned outward of the coil end accommodation channel in the radial direction, and surrounds the first coil end accommodation channel. With this structure, the coolant in the first coil end accommodation channel can be cooled more effectively.
(4) In the electric motor according to any one of (1) to (3), the channel formed in the first housing cover portion of the housing cooling channel may be positioned outward of the first coil end of the coil in the radial direction. This structure can prevent a distance between the coil and the housing cooling channel from being excessively long. As such, the heat of the coil can be efficiently absorbed.
(5) In the electric motor according to any one of (1) to (4), the coil may include a second coil end disposed opposite to the first coil end in the axial direction, the housing may include a second housing cover portion disposed opposite to the first housing cover portion in the axial direction, the stator cooling channel may include a second coil end accommodation channel accommodating the second coil end, the second coil end accommodation channel may be defined inside an inner surface of the second housing cover portion, and the housing cooling channel may include a channel formed in the second housing cover portion. With this structure, the coolant flowing through the second coil end accommodation cannel can be cooled by the coolant flowing though the housing cooling channel formed in the second housing cover portion.
(6) In the electric motor according to (5), the stator cooling channel may include a connection channel that connects the first coil end accommodation channel with the second coil end accommodation channel. This structure enables to supply the coolant to one of the coil end accommodation channels and discharge the coolant from the other coil end accommodation channel, for example.
(7) In the electric motor according to (6), the housing may include a housing protrusion that protrudes outward from the housing cylindrical portion in the radial direction, and the stator cooling channel may include a first end channel and a second end channel, the first end channel being formed in the housing protrusion and supplying coolant to ONE of the first coil end accommodation channel and the second coil end accommodation channel, the second end channel being formed in the housing protrusion and discharging coolant from the other one of the first coil end accommodation channel and the second coil end accommodation channel. The connection channel may be positioned opposite to the first end channel and the second end channel across a plane including the axis. This structure can provide the coolant to the entire two coil end accommodation channels in a well-balanced manner.
(8) In the electric motor according to (6), the connection channel may be formed in the housing cylindrical portion. This structure eliminates the need to form a groove functioning as a channel in the stator core. As such, a width of a magnetic path in the stator core can be sufficiently secured.
(9) In the electric motor according to any one of (5) to (8), the first coil end accommodation channel and the second coil end accommodation channel may be formed around the axis, the channel formed in the first housing cover portion of the housing cooling channel may be formed around the axis, positioned outward of the first coil end accommodation channel in the radial direction, and surround the first coil end accommodation channel, the channel formed in the second housing cover portion of the housing cooling channel may be formed around the axis, positioned outward of the second coil end accommodation channel in the radial direction, and surround the second coil end accommodation channel. This structure can more effectively cool the coolant flowing through the first coil end accommodation channel and the second coil end accommodation channel.
(10) In the electric motor according to any one of (1) to (9), the housing cooling channel may include, as the channel formed in the housing cylindrical portion, a plurality of axial channels that are arranged in the rotation direction and each extend in the axial direction. The housing cooling channel may include, as the channel formed in the first housing cover portion, a plurality of first rotation direction channels that are arranged in the rotation direction. Each of the first rotation direction channels connects two axial channels adjacent to each other. This structure serves to provide the coolant flowing through the housing cooling channel in a wide range of the housing.
(11) In the electric motor according to (10), the housing may include a second housing cover portion that is disposed opposite to the first housing cover portion in the axial direction and attached to the housing cylindrical portion. The housing cooling channel may include a plurality of second rotation direction channels that are formed in the second housing cover portion and arranged in the rotation direction, and each of the second rotation direction channels may connect two axial channels adjacent to each other. This structure serves to provide the coolant flowing through the housing cooling channel in the entire housing.

### BRIEF DESCRIPTION OF THE DRAWINGS

FIG. 1 is a left side perspective view of an electric motor as an example of the electric motor proposed in the present disclosure;
FIG. 2 is an exploded perspective view of the electric motor shown in FIG. 1;
FIG. 3 is a right side perspective view of the electric motor shown in FIG. 1;
FIG. 4 is an exploded perspective view of the electric motor shown in FIG. 3;
FIG. 5 is a perspective view of a stator of the electric motor shown in FIG. 1;
FIG. 6 is an exploded perspective view of the stator shown in FIG. 5;
FIG. 7 is an enlarged view of an area indicated by the broken line VII in FIG. 6;
FIG. 8 is an enlarged view of an area indicated by the broken line VIII in FIG. 6;
FIG. 9A is a front view of the electric motor shown in FIG. 1. A housing cooling channel is shown in dashed lines;
FIG. 9B is a front view of the electric motor shown in FIG. 1. A stator cooling channel is shown in dashed lines;
FIG. 10 is a plan view of the electric motor shown in FIG. 1;
FIG. 11A is a cross-sectional view of the electric motor taken along the line XI-XI shown in FIG. 10;
FIG. 11B is an enlarged view of FIG. 11A;
FIG. 12A is a side view (axial view) of a housing cylindrical portion shown in FIGs. 2 and 3;
FIG. 12B is an enlarged view of FIG. 12A. A terminal base attached to the housing cylindrical portion is also shown;
FIG. 13 is a diagram of a side surface of a housing cover portion on the right side (a surface facing the housing cylindrical portion);
FIG. 14 is a diagram of a side surface of a housing cover portion on the left side (a surface facing the housing cylindrical portion);
FIG. 15A is a cross-sectional perspective view of the electric motor and shows a sub connection channel;
FIG. 15B is an enlarged view of an area indicated by the broken line XV in FIG. 15A;
FIG. 16 is a cross-sectional view of the stator;
FIG. 17 is an enlarged view of FIG. 16;
FIG. 18 is a cross-sectional view of the stator core in a first modification;
FIG. 19 is a cross-sectional view of the stator core in a second modification; and
FIG. 20 is a cross-sectional view of the stator core in a modification and shows a seat surrounding the coil (wire).

### DETAILED DESCRIPTION OF PREFERRED EMBODIMENTS

In the terminology as used herein, the term "and/or" includes any and all combinations of one or more of the associated listed items. As used herein, the singular forms "a," "an," and "the" are intended to include the plural forms as well as the singular forms, unless the context clearly indicates otherwise. It will be further understood that the terms "comprises", "comprising", "includes", and/or "including", when used in this specification, specify the presence of stated features, steps, operations, elements, and/or components, but do not preclude the presence or addition of one or more other features, steps, operations, elements, components, and/or groups thereof.

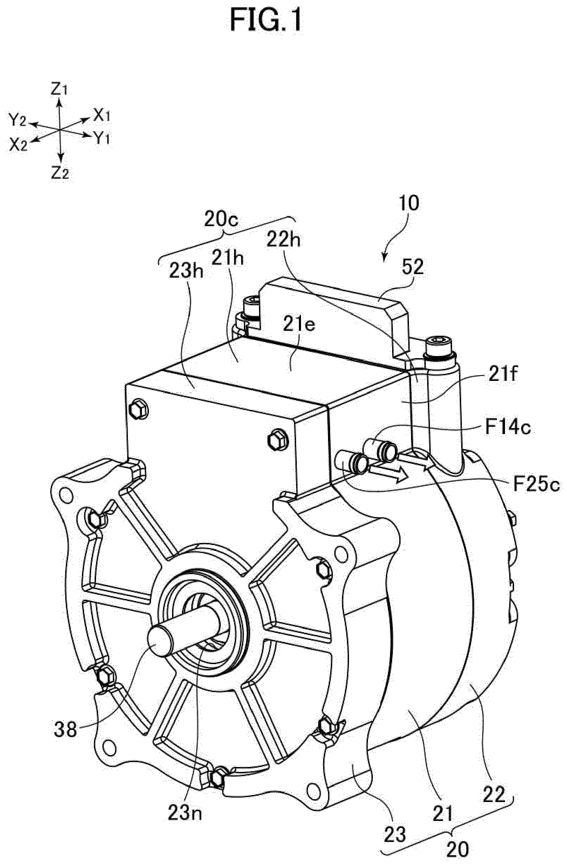

In the following, for example, an electric motor 10 shown in FIG. 1 will be described as an example of the electric motor. The electric motor 10 can be used, for example, as a power source of an electric vehicle, a ship, an unmanned aerial vehicle, and a robot, and as a generator within them.

In the following, a Z1 direction and a Z2 direction shown in FIG. 1, for example, will be referred to as upper and lower directions, respectively. A X1-X2 direction is referred to as an axial direction or a left-right direction, and a X1 direction and a X2 direction are respectively referred to as a right direction and a left direction. A Y1-Y2 direction is referred to as a front-rear direction, and a Y1 direction and a Y2 direction are respectively referred to as a front direction and a rear direction. Further, Dr shown in FIG. 1 is referred to as a rotation direction.

These directions are defined for describing the relative positional relationship of elements (components, members, parts) of the electric motor 10, and do not limit the posture of the electric motor 10 in use. As such, when the electric motor 10 is mounted on a device such as a vehicle, a transportation machine, and a robot, the electric motor may be disposed such that a rotation shaft 38, which will be described later, faces in the left-right direction of the device, or may be disposed such that the electric motor faces in the vertical direction of the device.

### [Overall configuration of electric motor]

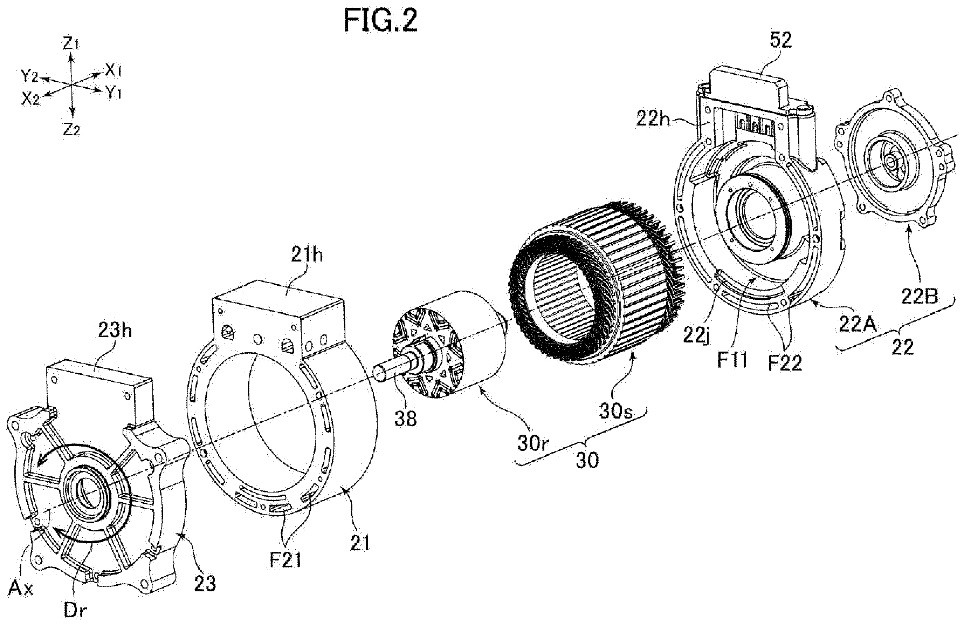

As shown in FIGs. 1 and 2, the electric motor 10 includes a motor body 30 and a housing 20 that houses the motor body 30.

As shown in FIG. 2, the motor body 30 includes a rotor 30r, which is rotatable around an axis Ax, and a stator 30s. The stator 30s has a cylindrical shape, and the rotor 30r is disposed therein. In other words, the stator 30s is disposed radially outward of the rotor 30r. The inner peripheral surface of the stator 30s (end surface of a tooth portion 31a to be described later) is opposed to the rotor 30r in the radial direction. The motor body 30 has a rotation shaft 38 disposed on the axis Ax. The rotation shaft 38 is inserted into and fixed to the rotor 30r. The rotation shaft 38 and the rotor 30r are integrally rotatable around the axis Ax.

### [Housing]

As shown in FIG. 2, the housing 20 (see FIG. 1) has a housing cylindrical portion (housing tube portion) 21. The housing cylindrical portion 21 has a substantially cylindrical shape and opens toward one side (right side) in the axial direction and an opposite side (left side) in the axial direction. The motor body 30 is disposed inside the housing cylindrical portion 21. In other words, the housing cylindrical portion 21 is positioned radially outward of the motor body 30. The outer peripheral surface of the stator 30s (outer peripheral surface of a stator core 31 to be described later) is fixed to the inner surface of the housing cylindrical portion 21.

The housing 20 (see FIG. 1) may further include a housing cover portion 23 disposed on the left side of the housing cylindrical portion 21 and a housing cover portion 22 disposed on the right side of the housing cylindrical portion 21. The housing cover portion 23 is attached to the left side of the housing cylindrical portion 21, and closes the left side of the housing cylindrical portion 21. The housing cover portion 22 is attached to the right side of the housing cylindrical portion 21, and closes the right side of the housing cylindrical portion 21.

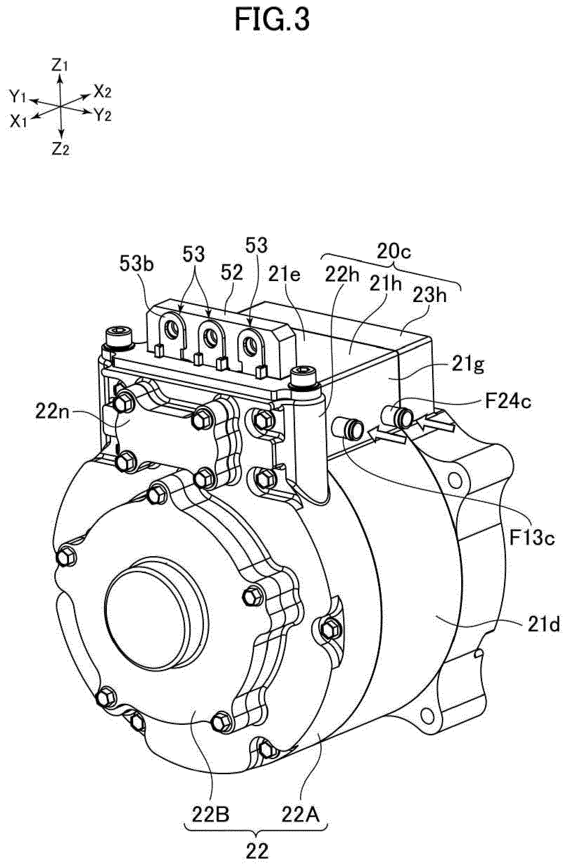

As shown in FIG. 1, an opening 23n is formed in the housing cover portion 23 on the left side, and the rotation shaft 38 protrudes outward of (to the left side) the housing 20 through the opening 23n. Such an opening is not formed in the housing cover portion 22 on the right side (see FIG. 3). The housing cover portion 22 may have a cover body 22A and a shaft cover portion 22B. The cover body 22A may have an opening at a position corresponding to the rotation shaft 38. The shaft cover portion 22B may block such an opening. Unlike the example shown in the drawings, the rotation shaft 38 may protrude to both the left side and the right side of the housing 20 or only to the right side.

### [Stator]

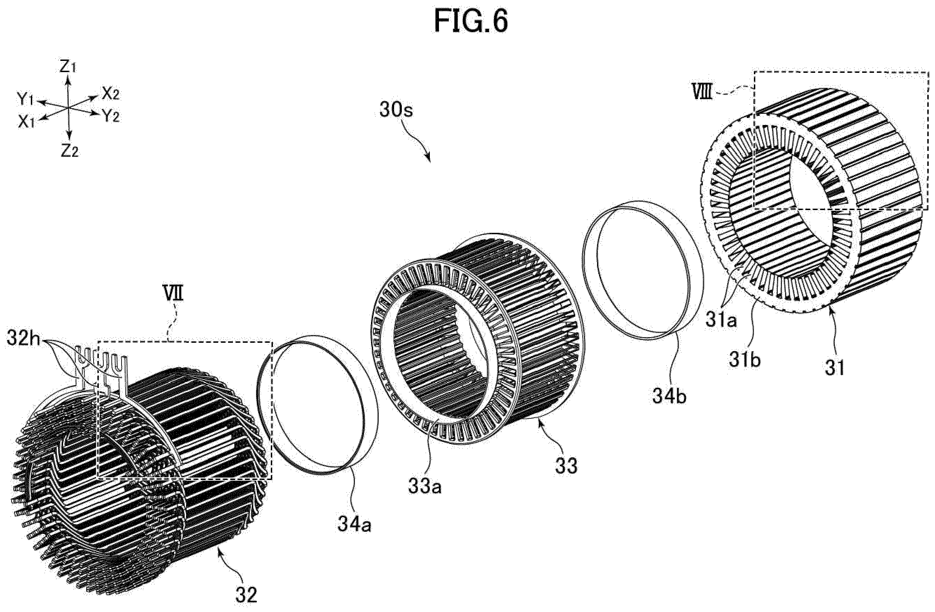

As shown in FIG. 6, the stator 30s includes a stator core 31 and a coil 32. The stator core 31 includes a barrel-like yoke portion 31b and a plurality of tooth portions 31a extending radially inward (toward the axis Ax) from the yoke portion 31b. The tooth portions 31a are spaced apart from each other in the rotation direction. The stator core 31 is formed of, for example, a plurality of electromagnetic steel sheets laminated in the axial direction. The stator core 31 may be formed of soft magnetic iron powder (powder material).

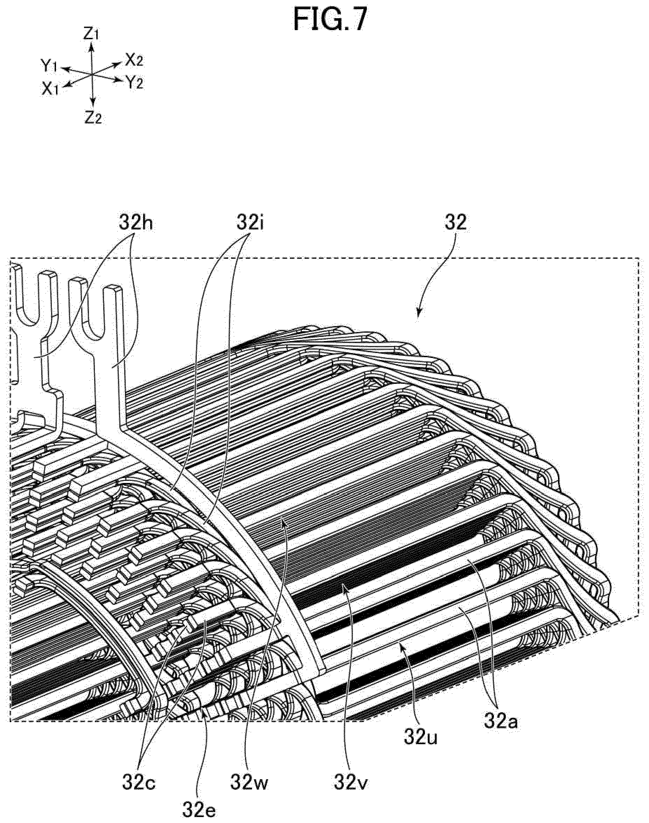

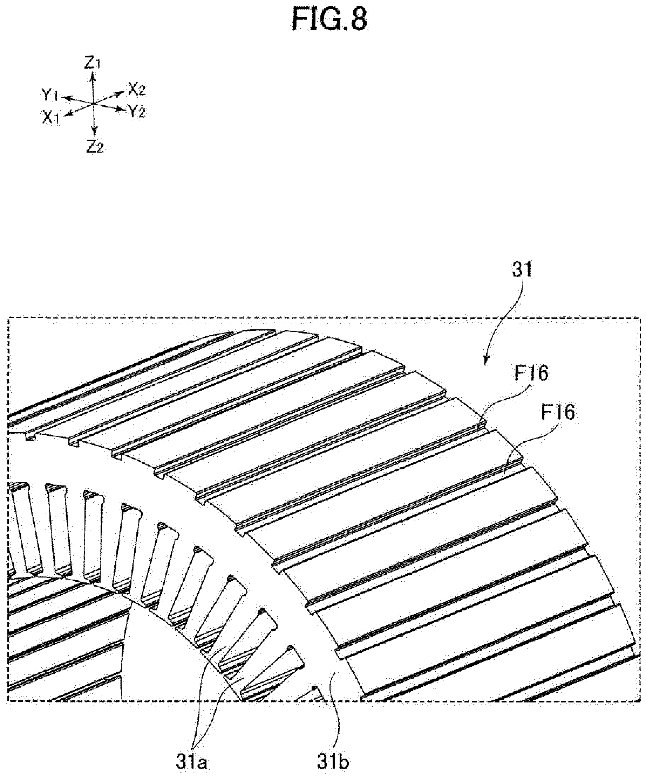

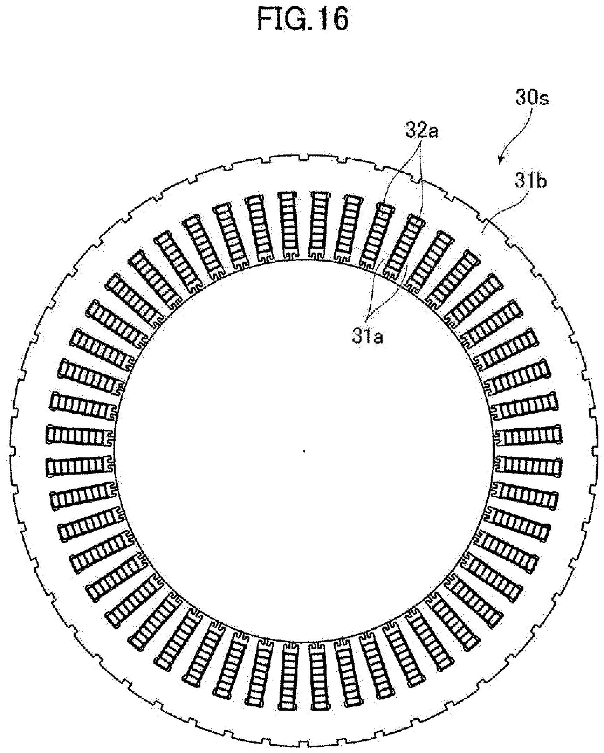

The electric motor 10 is driven by three-phase alternating current, for example, and as shown in FIG. 7, the coil 32 has three electric wires 32u, 32v, and 32w. The electric wires 32u, 32v, and 32w may each have a flat conductor rod 32a (see FIGs. 8 and 16) inserted between the tooth portions 31a of the stator core 31. An end portion32c of the conductor rod 32c (see FIG. 7) may be connected (welded) to an end portion 32c of another conductor rod 32a so as to form electric wires 32u, 32v, and 32w. As shown in FIG. 7, the electric wires 32u, 32v, and 32w each have a terminal portion 32h at an end portion thereof. The terminal portion 32h is fixed to a terminal base 51 to be described later.

The structure of the coil 32 is not limited to this. The electric wires 32u, 32v, and 32w may be flexible. The electric wires may be wound around the tooth portions 31a. The electric motor 10 may not be driven by three-phase alternating current but by five-phase alternating current or seven-phase alternating current, for example. The electric motor 10 may be driven by two-phase alternating current.

### [Rotor]

The rotor 30r may include a plurality of permanent magnets and a rotor core arranged in a rotation direction. The permanent magnet may be inserted into a through-hole formed in the rotor core and held by the rotor core, for example. Alternatively, the permanent magnet may be fixed to the surface of the cylindrical rotor core. The rotor core may be formed of a resin or an electrical steel sheet.

### [Cooling channel]

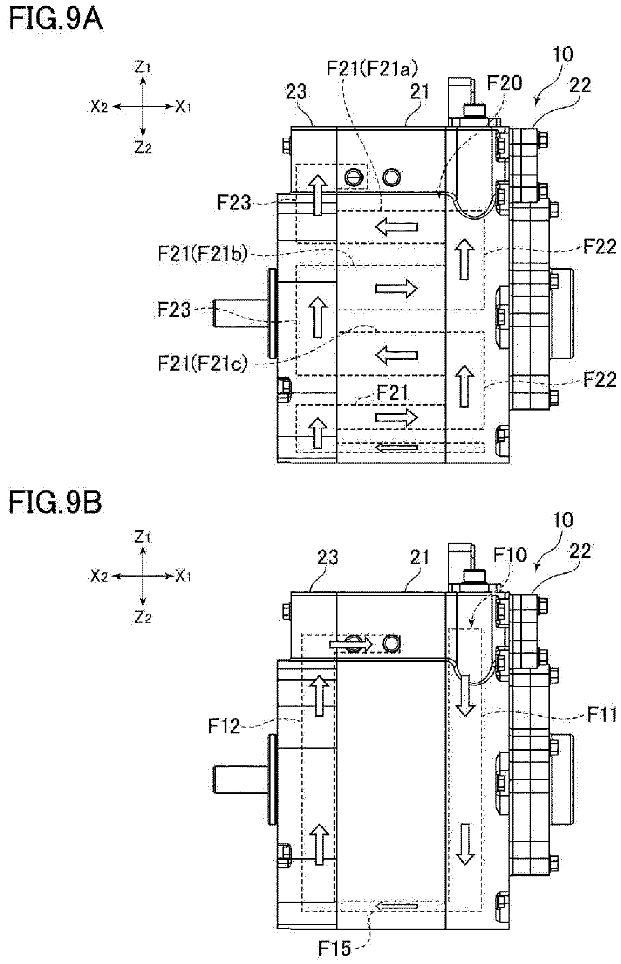

The electric motor 10 includes a stator cooling channel F10 (see FIG.9B) and a housing cooling channel F20 (see FIG. 9A).

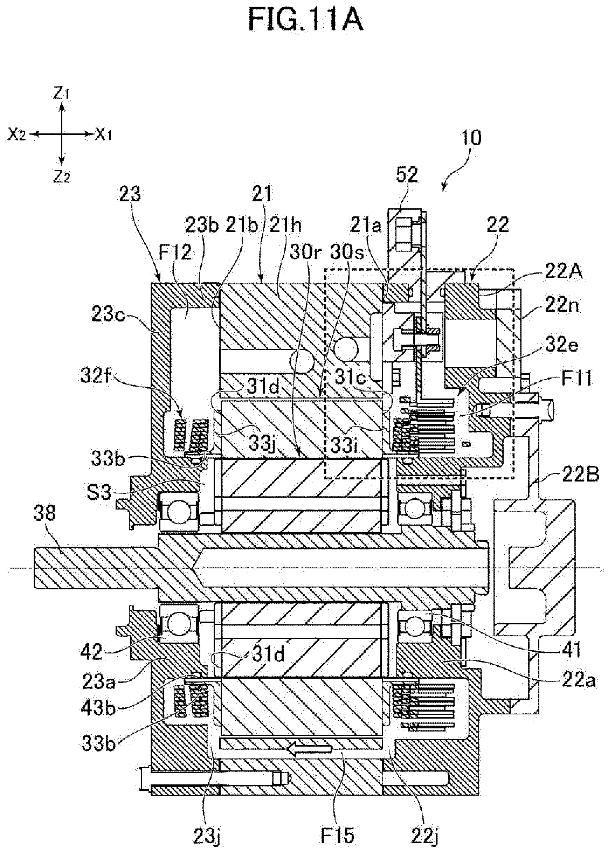

The stator cooling channel F10 is filled with coolant for cooling the stator 30s. The coolant filled in the stator cooling channel F10 (the coolant filled in channels F11 and F12 in FIG. 11A) passes through the coil ends 32e and 32f of the coil 32 (see FIG. 11A). The coil ends 32e and 32f are portions of the coil 32 that protrude from the side surfaces 31c and 31d of the stator core 31 in the axial direction. Such a coolant absorbs the heat generated by the energization of the coil 32. An insulating fluid (oil) can be used as coolant.

When the electric motor 10 is driven, the heat generated by the current flowing through the coil 32 is transmitted to the stator core 31, and the stator core 31 itself generates heat by the magnetic flux flowing through the stator core 31. Such heat is transferred to the housing 20, and the housing 20 also becomes hot. The coolant filled in the housing cooling channel F20 (see FIG. 9B) passes through the interior of the housing 20 and absorbs the heat transferred to the housing 20. Water can be used as coolant. Similarly to the coolant flowing through the stator cooling channel F10, an insulating fluid may be used as coolant.

The stator cooling channel F10 is connected to a heat-exchanger (oil cooler) (not shown). The coolant flowing through the stator cooling channel F10 passes through a pipe to be sent to such a heat-exchanger. The housing cooling channel F20 is connected to a heat-exchanger (radiator) (not shown). The coolant flowing through the housing cooling channel F20 passes through the pipe to be sent to the heat-exchanger.

### [Stator cooling channel]

As shown in FIGs. 2 and 11A, the stator cooling channel F10 includes a coil end accommodation channel F11 accommodating the coil end 32e on the right side. The coil end accommodation channel F11 is formed inside the inner surface of the housing 20. More specifically, the coil end accommodation channel F11 is formed inside the inner surface of the housing cover portion 22 on the right side. The coil end accommodation channel F11 surrounds the axis Ax when viewed in the axial direction. The coil end accommodation channel F11 accommodates the entire coil end 32e. The coil end 32e is immersed in the coolant flowing through the coil end accommodation channel F11.

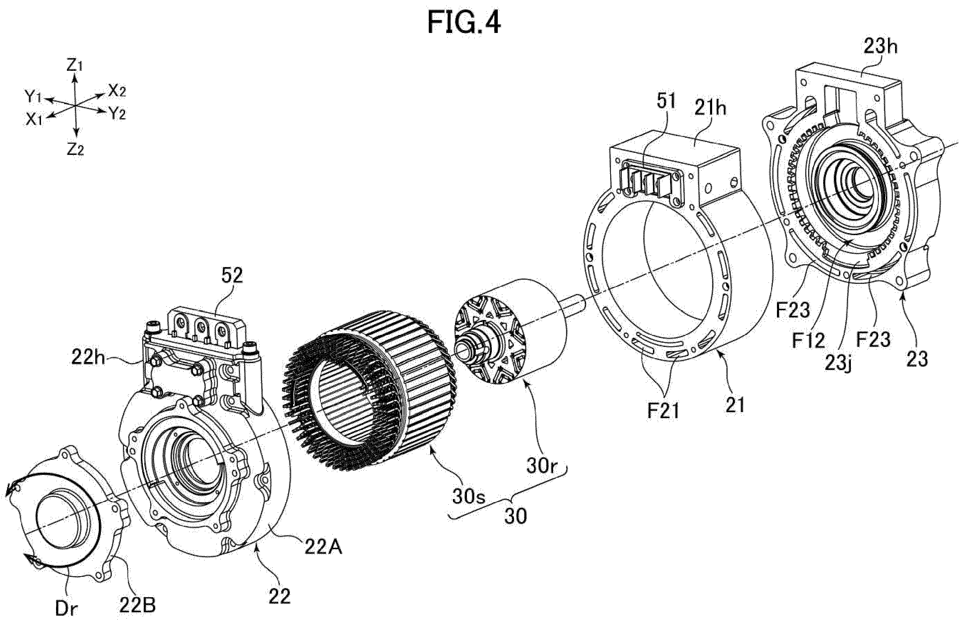

As shown in FIGs. 4 and 11A, the stator cooling channel F10 has a coil end accommodation channel F12 on the opposite side to the right-side coil end accommodation channel F11 across the stator core 31. The coil end accommodation channel F12 accommodates the left-side coil end 32f. The coil end accommodation channel F12 is formed inside the inner surface of the housing 20. More specifically, the coil end accommodation channel F12 is formed inside the inner surface of the housing cover portion 23 on the left side. The coil end accommodation channel F12 surrounds the axis Ax when viewed in the axial direction. The coil end accommodation channel F12 accommodates the entire coil end 32f. The coil end 32f is immersed in the coolant flowing through the coil end accommodation channel F12.

The coil end accommodation channel F11 on the right side and the coil end accommodation channel F12 on the left side are connected to each other via a connection channel F15 (see FIG. 11A) extending in the axial direction and formed in the housing 20. The connection channel F15 will be described in detail later.

As shown in FIG. 11A, the housing cover portion 22 on the right side includes a shaft support portion 22a supporting the rotation shaft 38. The shaft support portion 22a has a cylindrical shape, and a bearing 41 is disposed inside the shaft support portion. The right portion of the rotation shaft 38 is supported by the shaft support portion 22a via the bearing 41.

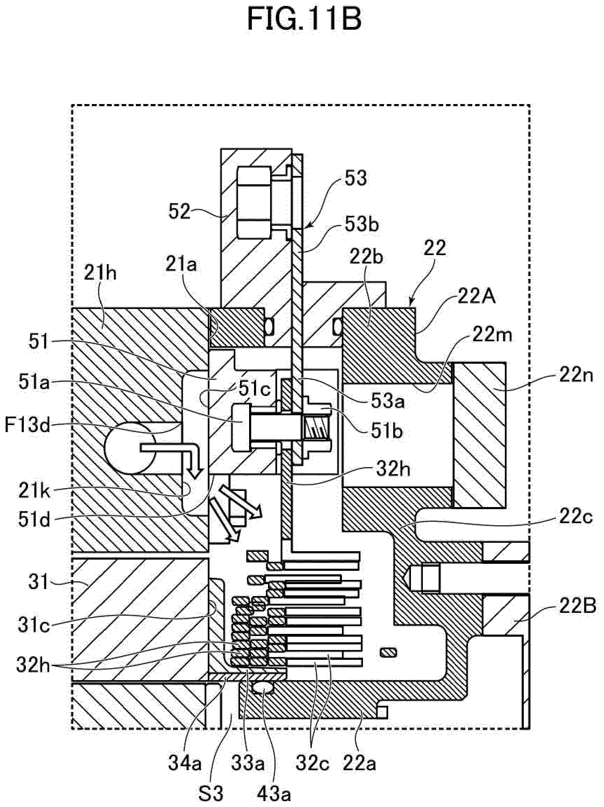

The coil end 32e on the right side is located radially outward of the shaft support 22a. As shown in FIG. 11B, the coil end accommodation channel F11 is a space defined by the outer peripheral surface of the shaft support portion 22a, the inner surface of the housing cover portion 22, the right side surface 21a of the housing cylindrical portion 21, and the right side surface 31c of the stator core 31. These portions define an annular-shaped coil end accommodation channel F11 surrounding the rotation shaft 38.

As shown in FIG. 11A, the housing cover portion 23 on the left side includes a shaft support portion 23a supporting the rotation shaft 38. The shaft support portion 23a has a cylindrical shape, and a bearing 42 is disposed inside the shaft support portion. The left portion of the rotation shaft 38 is supported by the shaft support portion 23a via the bearing 42.

As shown in FIG. 11A, the coil end 32f on the left side is located radially outward of the shaft support 23a. The coil end accommodation channel F12 is a space defined by the outer peripheral surface of the shaft support portion 23a, the inner surface of the housing cover portion 23, the left side surface 21b of the housing cylindrical portion 21, and the right side surface 31d of the stator core 31. These portions define an annular-shaped coil end accommodation channel F12 surrounding the rotation shaft 38.

### [Partitioning structure between rotor housing chamber and stator cooling channel]

As shown in FIG. 11A, a rotor housing chamber S3 in which the rotor 30r is housed is formed inside the housing 20. A partition is formed between the rotor housing chamber S3 and the coil end accommodation channels F11 and F12 to prevent coolant from entering the rotor housing chamber S3.

Specifically, the stator 30s includes a resin portion 33 (see FIG. 6). The resin portion 33 is formed of resin. For example, the resin portion 33 may be integrally formed with the stator core 31 by insert molding. That is, the stator core 31 may be disposed in the mold, and then a molten resin, which is a material of the resin portion 33, may be supplied into the mold. In this manner, the resin portion 33 and the stator core 31 may be integrally formed.

As shown in FIG. 11B, the resin portion 33 includes a cylindrical partition portion 33a (see FIG. 6) extending in the axial direction beyond the right side surface 31c of the stator core 31. A partition ring 34a is disposed inside the partition portion 33a. The partition ring 34a is formed of metal, for example. A shaft support portion 22a is positioned inside the partition ring 34a. A sealing member 43a is disposed between the outer peripheral surface of the shaft support portion 22a and the inner peripheral surface of the partition ring 34a. This prevents the coolant flowing through the coil end housing channel F11 on the right side from entering the rotor housing chamber S3.

As shown in FIG. 11A, the resin portion 33 includes a cylindrical partition portion 33b extending in the axial direction beyond the left side surface 31d of the stator core 31. A partition ring 34b (see FIG. 6) is disposed inside the partition portion 33b. The partition ring 34b is also formed of metal, for example. A shaft support portion 23a is positioned inside the partition ring 34b. A sealing member 43b is disposed between the outer peripheral surface of the shaft support portion 23a and the inner peripheral surface of the partition ring 34b. This prevents the coolant flowing through the coil end housing channel F12 from entering the rotor housing chamber S3.

As described above, the partition structure uses the metallic partition rings 34a and 34b, and the adhesion between the partition rings 34a and 34b and the sealing members 43a and 43b are thereby ensured, and the seal performance can be improved.

The partition rings 34a and 34b may be integrally formed with the resin portion 33 by insert molding together with the resin portion 33 and the stator core 31. This structure enables to integrally form the partition structure with the stator 30s, and thereby facilitating the assembly processing of the electric motor 10.

As shown in FIG. 11A, the housing cover portion 23 on the left side includes an outer peripheral portion 23b that is located radially outward of the coil end 32f and surrounds the coil end 32f. The housing cover portion 23 includes a side portion 23c extending from the shaft support portion 23a in the radial direction toward the outer peripheral portion 23b.

As shown in FIG. 11B, the housing cover portion 22 on the right side includes an outer peripheral portion 22b that is located radially outward of the coil end 32e and surrounds the coil end 32e. The housing cover portion 22 on the right side includes a side portion 22c extending from the shaft support portion 22a in the radial direction toward the outer peripheral portion 22b. A shaft cover portion 22B covering the end portion of the rotation shaft 38 may be attached to the side portion 22c.

### [Housing cooling channel]

The housing cooling channel F20 is formed within the thickness of the housing 20. That is, the housing cooling channel F20 is formed between the inner surface and the outer surface of the housing 20.

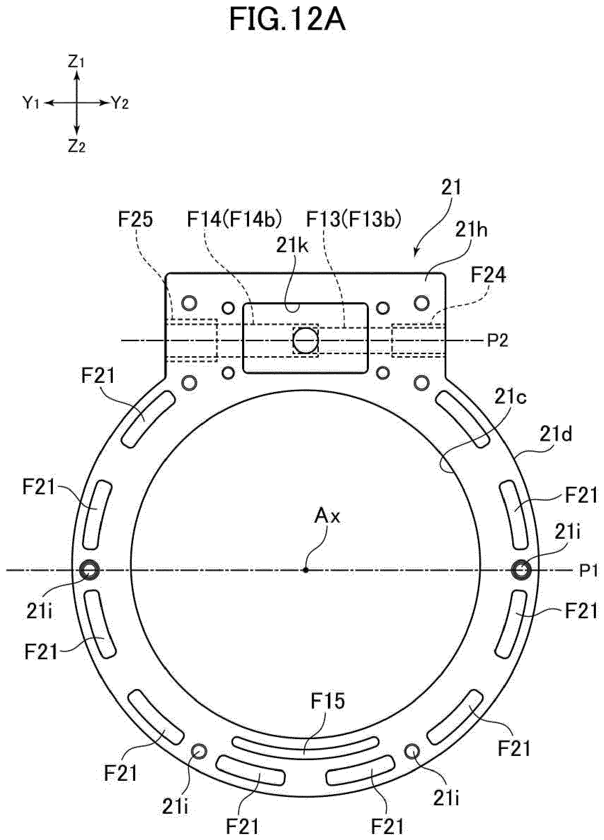

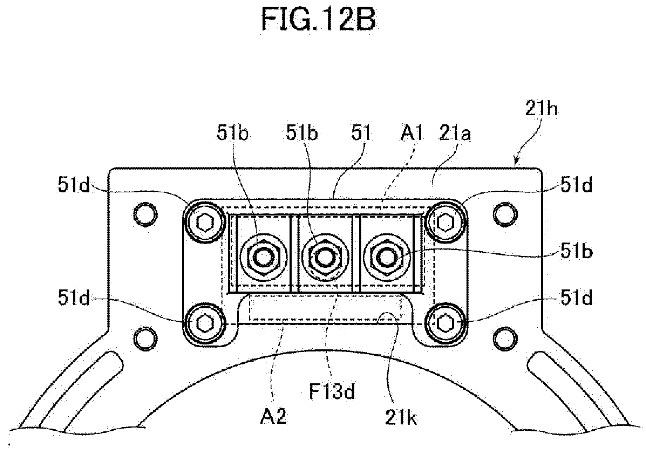

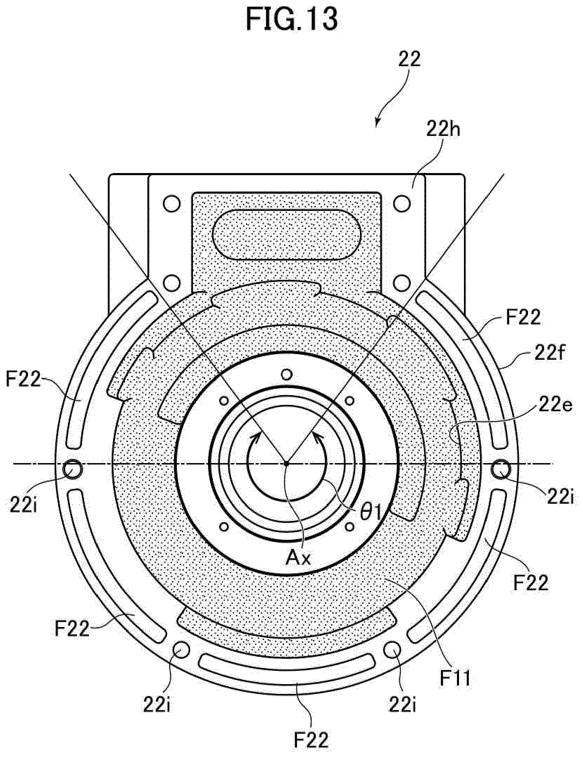

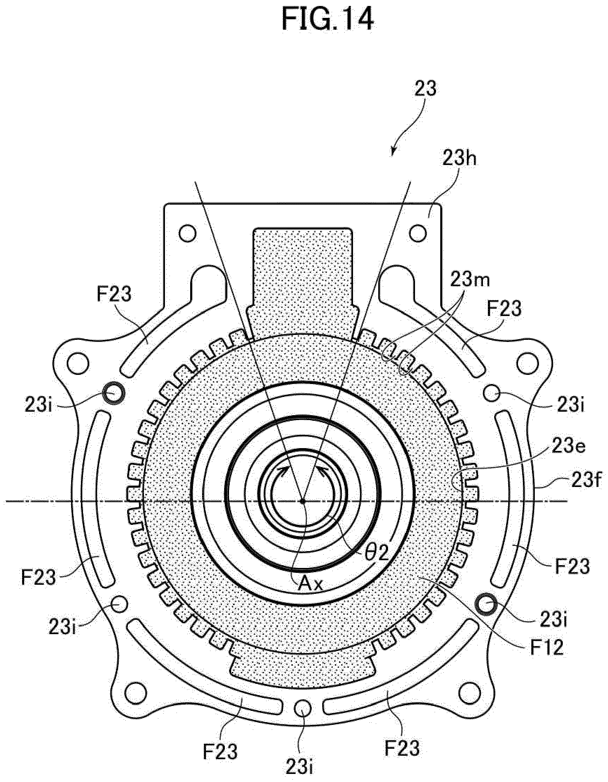

Specifically, the housing cooling channel F20 includes a channel F21 (see FIGs. 2 and 12) formed between an inner surface 21c (see FIG. 12A) and an outer surface 21d (see FIG. 12A) of the housing cylindrical portion 21 (hereinafter, the channel F21 is referred to as "axial channel"). The housing cooling channel F20 includes a channel F22 (see FIGs. 2 and 13) formed between an inner surface 22e (see FIG. 13) and an outer surface 22f (see FIG. 13) of the housing cover portion 22 on the right side. Further, the housing cooling channel F20 includes a channel F23 (see FIGs. 4 and 14) formed between an inner surface 23e (see FIG. 14) and an outer surface 23f (see FIG. 14) of the housing cover portion 23 on the left side (hereinafter, the channels F22 and F23 are referred to as "rotation direction channel").

### [Positional relationship between two systems of cooling channels]

As described above, a part of the stator cooling channel F10 (coil end accommodation channels F11 and F12) is formed inside the inner surfaces 22e and 23e of the housing cover portions 22 and 23, and a part of the housing cooling channel F20 (rotation direction channels F22 and F23) is formed between the inner surfaces 22e and 23e and the outer surfaces 22f and 23f of the housing cover portions 22 and 23. As such, the heat of the coolant flowing through the stator cooling channel F10 can be absorbed in the coolant flowing through the housing cooling channel F20. This can reduce the required performance of the heat-exchanger for the coolant filled in the stator cooling channel F10, for example. As such, when the electric motor 10 is mounted on a device such as a vehicle, a small-sized heat exchanger can be used.

The housing cover portions 22 and 23 respectively include the coil end accommodation channels F11 and F12 and parts of the housing cooling channel F20 (rotational direction channels F22 and F23). As such, the heat of the coolant flowing through the stator cooling channel F10 can be more effectively absorbed in the coolant flowing through the housing cooling channel F20.

As shown in FIG. 2, the rotation direction channel F22 formed in the housing cover portion 22 on the right side is located radially outward of the coil end accommodation channel F11. That is, when the electric motor 10 is viewed in a direction perpendicular to the axis Ax, the rotation direction channel F22 and the coil end accommodation channel F11 overlap each other. As such, the heat of the coolant flowing through the stator cooling channel F10 can be more effectively absorbed in the coolant flowing through the housing cooling channel F20.

The rotation direction channel F22 formed oi the housing cover portion 22 on the right side is located radially outward of the coil end 32e on the right side. That is, when the electric motor 10 is viewed in a direction perpendicular to the axis Ax, the rotation direction channel F22 overlaps the coil end 32e itself. This structure reduces the distance between the rotation direction channel F22 and the coil end 32e, and thus the heat of the coolant passing through the coil end 32e can be effectively absorbed by the coolant flowing through the rotation direction channel F22.

This is similarly established in the channels F23 and F12 formed in the housing cover portion 23 on the left side. That is, as shown in FIG. 4, the rotation direction channel F23 formed in the housing cover portion 23 is located radially outward of the coil end accommodation channel F12. As such, when the electric motor 10 is viewed in a direction perpendicular to the axis Ax, the rotation direction channel F23 and the coil end accommodation channel F12 overlap each other.

The rotation direction channel F23 formed in the housing cover portion 23 on the left side is located radially outward of the coil end 32f. That is, when the electric motor 10 is viewed in a direction perpendicular to the axis Ax, the rotation direction channel F23 overlaps the coil end 32f itself. This structure reduces the distance between the rotation direction channel F23 and the coil end 32f, and thus the heat of the coolant passing through the coil end 32f can be effectively absorbed by the coolant flowing through the rotation direction channel F23.

### [Detail of housing cooling channel]

As shown in FIGs. 2 and 9A, a plurality of axial channels F21 are formed to extend through the housing cylindrical portion 21 in the axial direction. The axial channels F21 penetrate through the housing cylindrical portion 21 in the axial direction. The axial channels F21 are arranged in the rotation direction.

As shown in FIGs. 2 and 13, a plurality of rotation direction channels F22 disposed in the rotation direction are formed in the housing cover portion 22 on the right side. The rotation direction channels F22 each are a recess (groove) that is open leftward (toward the housing cylindrical portion 21). The rotation direction channels F22 are disposed at the ends of two axial channels F21 adjacent to each other in the rotation direction to connect these channels.

As shown in FIGs. 4 and 14, a plurality of rotation direction channels F23 disposed in the rotation direction are also formed in the housing cover portion 23 on the left side. The rotation direction channels F23 each are a recess (groove) that is open rightward (toward the housing cylindrical portion 21). The rotation direction channels F23 are disposed at the ends of two axial channels F21 adjacent to each other in the rotation direction to connect these channels.

The structure of the channels F21, F22, and F23 allows the housing cooling channel F20 to extend over the entire housing 20, and a higher cooling performance can be thereby ensured.

The rotation direction channels F22, the axial channels F21, and the rotation direction channels F23 are connected so as to form one continuous channel. FIG. 9A shows three axial channels F21a. F21b, and F21c formed in the rotation direction. The rotation direction channel F22 formed in the housing cover portion 22 is located on the right side of the two axial channels F21a and F21b to connect these channels. The rotation direction channel F23 formed in the housing cover portion 23 is located on the left side of the two axial channels F21b and F21c to connect these channels. This forms one continuous channel.

The axial channel F21 penetrates through the housing cylindrical portion 21 in the axial direction, facilitating the forming operation of the axial channel F21. For example, the axial channel F21 can be formed by casting without a cutting process. The rotation direction channels F22 and F23 each are a recess (groove) formed in the side surfaces of the housing cover portions 22 and 23. As such, the rotation direction channels F22 and F23 can be formed by casting without a cutting process, for example.

As shown in FIGs. 13 and 14, the coil end accommodation channels F11 and F12 are formed around the axis Ax (in FIGs. 13 and 14, the area of the coil end accommodation channels F11 and F12 is patterned). The coil end accommodation channels F11 and F12 may be formed over 360 degrees around the axis Ax. The coil end accommodation channels F11 and F12 may have a ring shape around the shaft support portions 22a and 23a that support the rotation shaft 38.

As described above, the rotation direction channels F22 and F23 are formed in the housing cover portions 22 and 23. As shown in FIG. 13, the rotation direction channels F22 are located radially outward of the coil end accommodation channel F11, are formed around the axis Ax, and surround the coil end accommodation channel F11. Further, as shown in FIG. 14, the rotation direction channels F23 are located radially outward of the coil end accommodation channel F12, are formed around the axis Ax, and surround the coil end accommodation channel F12. These structures serve to effectively absorb the heat from the coolant flowing through the coil end accommodation channels F11 and F12.

As shown in FIG. 13, the rotation direction channels F22 surround the coil end accommodation channel F11 over an angular range θ1 around the axis Ax. The angler range θ1 may be 180 degrees or more. In this manner, the heat from coolant flowing through the coil end accommodation channel F11 can be more effectively absorbed. The angular range θ1 may be 270 degrees or more.

As shown in FIG. 14, the rotation direction channels F23 surround the coil end accommodation channel F12 over an angular range θ2 around the axis Ax. The angler range θ2 may be 180 degrees or more. In this manner, the heat from coolant flowing through the coil end accommodation channel F12 can be more effectively absorbed. The angular range θ2 may be 270 degrees or more.

Unlike the examples shown in FIGs. 13 and 14, the angular ranges θ1 and θ2, in which the rotation direction channels F22 and F23 is formed, may be smaller than 270 degrees.

As shown in FIG. 13, a fixing hole 22i may be formed between two rotation direction channels F22 adjacent to each other in the rotation direction. That is, the distance from the axis Ax to the rotation direction channel F22 and the distance from the axis Ax to the fixing hole 22i may be substantially the same. The screws or bolts inserted into the fixing holes 22i fix the housing cover portion 22 to the housing cylindrical portion 21. The positions of the fixing holes 22i are designed in this manner, and an increase in the size of the housings 20 can be thereby prevented.

As shown in FIG. 14, a fixing hole 23i may be formed between two rotation direction channels F23 adjacent to each other in the rotation direction. The screws or bolts inserted into the fixing holes 23i fix the housing cover portion 23 to the housing cylindrical portion 21. The positions of the fixing holes 23i are designed in this manner, and an increase in the size of the housings 20 can be thereby prevented.

As shown in FIG. 12A, fixing holes 21i corresponding to the fixing holes 22i and 23i may be formed in the housing cylindrical portion 21. The fixing hole 21i may be positioned between two adjacent axial channels F21.

### [End channel of stator cooling channel]

As shown in FIG. 3, the housing 20 has a housing protrusion 20c located radially outward with respect to the motor body 30. The housing protrusion 20c protrudes outwardly in the radial direction. That is, the distance from the axis Ax to an end surface (upper surface) 21e of the housing protrusion 20c is longer than the distance from the axis Ax to the outer peripheral surface of the housing 20 (outer surface 21d curved in an arc shape). Terminal bases 51 and 52, which will be described later, are attached to the housing protrusion 20c.

As shown in FIG. 3, the housing protrusion 20c includes, for example, a protrusion 21h formed in the housing cylindrical portion 21 and protrusions 23h and 22h formed in the left and right housing cover portions 23 and 22. In the following, the protrusions 21h, 22h, and 23h are also referred to as housing protrusions.

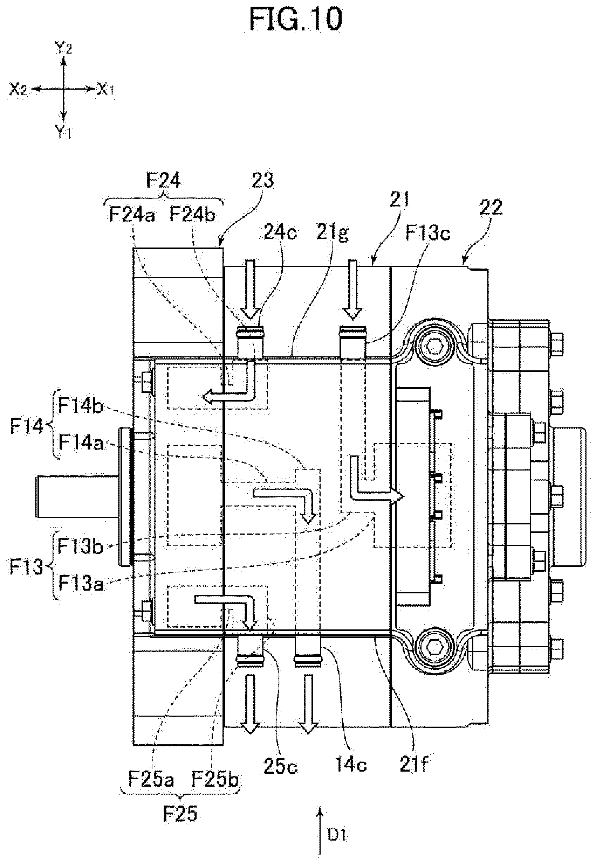

As shown in FIG. 10, end channels F13 and F14 connected to the coil end accommodation channels F11 and F12 are formed in the housing protrusion 21h as a part of the stator cooling channel F10. For example, the end channel F13 connected to the coil end accommodation channel F11 on the right side may function as a channel for supplying coolant to the coil end accommodation channel F11. In contrast, the end channel F14 connected to the coil end accommodation channel F12 on the left side may function as a channel for discharging coolant from the coil end accommodation channel F12.

### [Connection channel of stator cooling channel]

As shown in FIGs. 11A and 12A, the stator cooling channel F10 may include a connection channel F15 that connects the coil end accommodation channel F11 on the right side and the coil end accommodation channel F12 on the left side. The coolant introduced into the coil end accommodation channel F11 passes through the connection channel F15 and flows toward the coil end accommodation channel F12.

As shown in FIG. 12A, the connection channel F15 is located on the opposite side to the end channels F13 and F14 across a plane P1 including the axis Ax. In such a layout of the connection channel F15, the coolant introduced from the end channel F13 passes through the entire coil end accommodation channel F11 on the right side and reaches the connection channel F15. The coolant from the connection channel F15 passes through the entire coil end accommodation channel F12 on the left side and reaches the end channel F14. That is, it is possible to cool the entire coil ends 32e and 32f.

In the example shown in FIG. 12A, the connection channel F15 is formed at 180 degrees from the end channels F13 and F14 around the axis Ax in the rotation direction. This structure serves to effectively cool the entire coil ends 32e and 32f.

The arrangement of the connection channel F15 is not limited to the example shown in FIG. 12A. For example, the stator cooling channel F10 may include two connection channels F15 that are separated from each other in the rotation direction. In this case, the two connection channels F15 are disposed on the opposite side to the end channels F13 and F14 across the plane P1, but may not be positioned at 180 degrees from the end channel F13 and F14.

As shown in FIG. 12A, the connection channel F15 may be formed in the housing cylindrical portion 21. More specifically, the connection channel F15 may be formed between the inner surface 21c and the outer surface 21d of the housing cylindrical portion 21. The connection channel F15 penetrates through the housing cylindrical portion 21 in the axial direction. The connection channel F15 is formed in the housing cylindrical portion 21 as described, and this eliminates the need to form a groove in the stator core 31 so as to function as a connection channel. As such, the width of the magnetic path formed in the stator core 31 can be sufficiently secured.

The end portions of the connection channel F15 are located in the housing cover portions 22 and 23. A recess 22j (see FIGs. 2, 11A) may be formed in the housing cover portion 22 on the right side, and a recess 23j (see FIGs. 4, 12) may be formed in the housing cover portion 23 on the left side. The recesses 22j and 23j may serve as the end portions of the connection channel F15.

The structure of the connection channel F15 is not limited to the example shown in FIG. 11. For example, the connection channel F15 may be a recess (groove) formed on the inner surface 21c of the housing cylindrical portion 21. In this case, the connection channel F15 is defined by the recess formed on the inner surface 21c and the outer peripheral surface of the stator core 31. In this case as well, the width of the magnetic path formed in the stator core 31 can be sufficiently secured.

Alternatively, the connection channel F15 may be a recess (groove) formed on the outer peripheral surface of the stator core 31. In this case, the connection channel F15 is defined by the recess formed on the outer peripheral surface of the stator core 31 and the inner surface 21c of the housing cylindrical portion 21.

### [Sub connection channel of stator cooling channel]

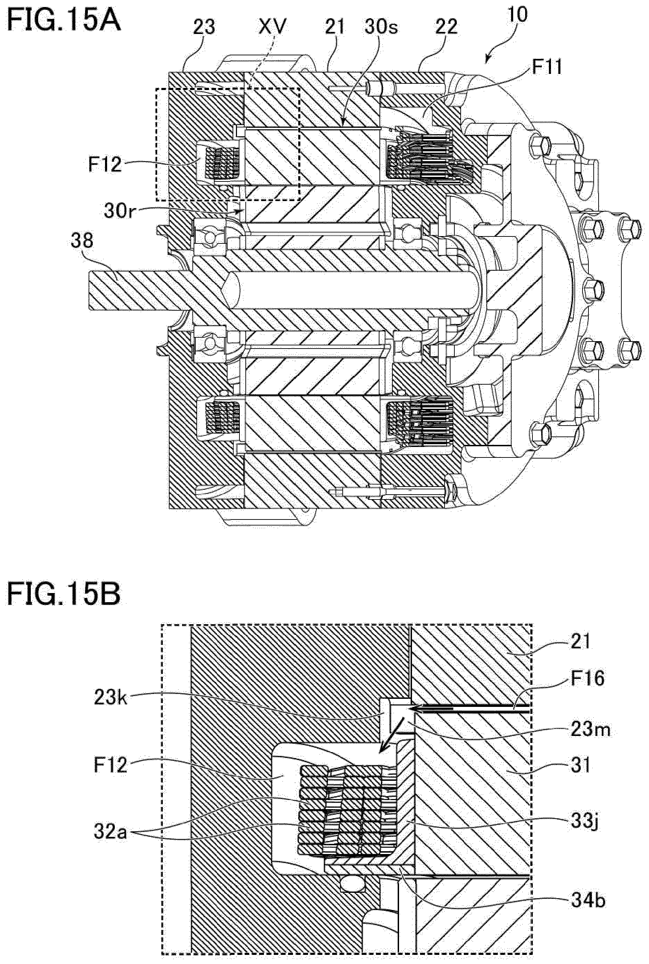

In addition to the connection channel F15 described above, the electric motor 10 may have a plurality of sub connection channels F16 (see FIGs.15A and 15B) arranged in the rotation direction. The width of each connection channel F16 in the rotation direction may be smaller than the width of the connection channel F15 in the rotation direction.

As shown in FIG. 8, the stator core 31 may include, on the outer peripheral surface, a recess (groove) that functions as a sub connection channel F16. The recess extends from the right side surface 31c to the left side surface 31d of the stator core 31 in the axial direction. The recess and the inner surface of the housing cylindrical portion 21 may define the sub connection channel F16. The sub connection channel F16 facilitates the flow of coolant from the coil end accommodation channel F11 to the coil end accommodation channel F12 on the opposite side.

The sub connection channels F16 may be formed over the entire circumference of the stator core 31. Alternatively, the sub connection channels F16 may be formed only in a part of the outer peripheral surface of the stator core 31.

As shown in FIG. 15B, the housing cover portion 23 on the left side may have a plurality of recesses 23k at positions corresponding to the sub connection channels F16. The recesses 23k are located in the axial direction with respect to the sub connection channels F16. The recesses 23k facilitate the flow of coolant in the sub connection channels F16.

A partition wall 23m may be formed between two recesses 23k adjacent in the rotation direction. The partition wall 23m allows the coolant to smoothly flow from the sub connection channel F16 toward the coil end 32f located in the coil end accommodation channel F12. If the partition wall 23m is not formed, the recesses 23k arranged in the rotation direction are connected. This forms a channel in the rotation direction. The coolant does not flow toward the coil end 32f, but flows through the channel formed by the recesses 23k toward the end channel F14 formed on the housing protrusion 20c. In the electric motor 10, however, such a flow is restricted by the partition wall 23m. As such, as indicated by the arrows in FIG. 15B, the coolant flows smoothly from the outlet of the sub connection channel F16 toward the coil end 32f.

Unlike the examples shown in FIGs. 8, 15A, and 15B, a recess (groove) functioning as a sub connection channel F16 may be formed on the inner peripheral surface of the housing cylindrical portion 21. As yet another example, the electric motor 10 may not have such a sub connection channel F16.

### [Details of end channel of two systems of cooling channels]

As described above, the stator cooling channel F10 includes the end channels F13 and F14 that are formed on the housing protrusion 21h and respectively connected to the coil end accommodation channels F11 and F12. In the following, the end channel F13 is referred to as a "supply end channel" and the end channel F14 is referred to as a "discharge end channel".

As shown in FIG. 10, the housing cooling channel F20 includes end channels F24 and F25 formed on the housing protrusion 21h. The end channels F24 and F25 are connected to a main channel of the housing cooling channel F20. The main channel corresponds to the rotation direction channels F22 and F23 formed in the housing cover portions 22 and 23 and the axial channel F21 formed in the housing cylindrical portion 21.

The end channel F24 supplies the main channel with coolant, for example, and the end channel F25 supplies the main channel with coolant, for example. In the following, the end channel F24 is referred to as a "supply end channel" and the end channel F25 is referred to as a "discharge end channel".

As described above, all of the four end channels F13, F14, F24, and F25 are formed in the housing protrusion 21h. As such, the outer diameters of the parts in the housing 20 other than the housing protrusion 21h can be reduced. This results in facilitating the arrangement of the electric motor 10 in a device on which the electric motor 10 is mounted, such as an electric two-wheeled vehicle.

In the example shown in FIG. 10, the end channels F24 and F25, which are a part of the housing cooling channel F20, are formed in the housing protrusion 21h of the housing cylindrical portion 21. Alternatively, the end channels F24 and F25 may be formed in the housing protrusion 23h of the housing cover portion 23 on the left side, or formed in the housing protrusion 22h of the housing cover portion 22 on the right side.

As shown in FIG. 10, the discharge end channel F14 and the supply end channel F13 of the stator cooling channel F10 may have a substantially L-shaped part. That is, the end channels F14 and F13 may include axial channels F14a and F13a extending in the axial direction and tangential direction channels F14b and F13b connected to the axial channels F14a and F13a. The tangential direction channels F14b and F13b may extend in a direction along the tangent line of the circle around the axis Ax (line indicated by P2 in FIG. 12A).

As shown in FIG. 10, the end channels F14 and F13 of the stator cooling channel F10 respectively have open ends (pipe connecting portions) F14c and F13c at their ends. A pipe for discharging the coolant from the stator cooling channel F10 is connected to the pipe connecting portion F14c, and a pipe for supplying the coolant to the stator cooling channel F10 is connected to the pipe connecting portion F13c.

As described, the end channels F14 and F13 have an L-shaped part, and thus ensure the flexibility of the positions of the pipe connecting portions F14c and F13c. In the example shown in FIG. 10, the pipe connecting portions F14c and F13c are formed on the front surface 21f or the rear surface 21g of the housing protrusion 20c. As such, when the electric motor 10 is mounted on a device such as a vehicle, other components can be disposed near the upper surface 21e of the housing 20. The "front surface 21f" is a surface facing the front side in the direction of the tangent line of the circle around the axis Ax (a line indicated by P2 in FIG. 12A), and the "rear surface 21g" is a surface facing the rear side in the direction of the tangent line.

As shown in FIG. 10, the discharge end channel F25 and the supply end channel F24 of the housing cooling channel F20 may also have a substantially L-shaped part. That is, the end channels F25 and F24 may include axial channels F25a and F24a extending in the axial direction and tangential direction channels F25b and F24b connected to the axial channels F25a and F24a. The tangential direction channels F25b and F24b may extend in a direction along the tangent line of the circle around the axis Ax.

As shown in FIG. 10, the end channels F24 and F25 of the housing cooling channel F20 respectively have open ends (pipe connecting portions) F24c and F25c at their ends. A pipe for discharging the coolant from the housing cooling channel F20 is connected to the pipe connecting portion F25c, and a pipe for supplying the coolant to the housing cooling channel F20 is connected to the pipe connecting portion F24c.

As described above, the end channels F24 and F25 have the L-shaped parts, and thus the pipe connecting portions F25c and F24c can be formed on the front surface 21f or the rear surface 21g of the housing protrusion 20c. As such, in a case where the electric motor 10 is mounted on a device such as an electric two-wheeled vehicle, other components can be disposed near the upper surface 21e of the housing 20.

As shown in FIG. 10, some of the four pipe connecting portions F13c, F14c, F24c, and F25c are formed on the front surface 21h of the housing protrusion 21f, and the remaining pipe connecting portions are formed on the rear surface 21g of the housing protrusion. More specifically, two pipe connecting portions F14c and F25c are formed on the front surface 21f, and two pipe connecting portions F13c and F24c are formed on the rear surface 21g of the housing protrusion 21h. As such, the areas of the front surface 21f and the rear surface 21g of the housing protrusion 21h can be effectively utilized.

As shown in FIG. 12A, all of the four end channels F13, F14, F24, and F25 are formed along a tangent plane P2, which is in contact with the cylindrical surface around the axis Ax. This structure serves to reduce the size (protrusion amount) of the housing protrusions 21h, 22h, and 23h in the radial direction.

As shown in FIG. 12A, when the housing 20 is viewed in the axial direction, the end channels F13, F14, F24, and F25 may have overlapping parts. Further, when the housing 20 is viewed from the front (when the housing 20 is viewed in the direction of an arrow D1 in FIG. 10), the end channels F13, F14, F24, and F25 may have overlapping parts. That is, the end channels F13, F14, F24, and F25 may be formed at substantially the same height from the plane P1 passing through the axis Ax. This structure serves to reduce the size (protrusion amount) of the housing protrusions 21h, 22h, and 23h in the radial direction. The front view of the housing 20 is to view the housing 20 in a direction perpendicular to both the direction along the axis Ax and the protruding direction of the housing protrusion 21h.

As shown in FIG. 12A, when the housing 20 is viewed in the axial direction, for example, the discharge end channel F14 of the stator cooling channel F10 and the supply end channel F24 of the housing cooling channel F20 may overlap with the supply end channel F13 of the stator cooling channel F10. Further, when the housing 20 is viewed in the axial direction, for example, the discharge end channel F14 of the stator cooling channel F10 and the discharge end channel F25 of the housing cooling channel F20 may overlap with each other.

Further, when the housing 20 is viewed from the front (when the housing 20 is viewed in the direction of the arrow D1 in FIG. 10), the discharge end channel F14 of the stator cooling channel F10, the supply end channel F24 of the housing cooling channel F20, and the discharge end channel F25 may overlap with each other.

As shown in FIG. 10, the two end channels F24 and F25 of the housing cooling channel F20 are separated from each other in the rotation direction. A part of the two end channels F13 and F14 (axial channels F13a and F14a) of the stator cooling channel F10 are positioned between the end channels F24 and F25 (positions in the rotation direction). Such an arrangement enables to prevent the two end channels F13 and F14 of the stator cooling channel F10 from being separated in the rotation direction.

In the example shown in FIG. 10, the axial channel F13a of the supply end channel F13 and the axial channel F14a of the discharge end channel F14 are at the same position in the rotation direction. This enables to easily cool the entire two coil ends 32e and 32f in a well-balanced manner as compared with a case, for example, where the axial channels F13a and F14a of the two end channels F13 and F14 are separated from each other in the rotation direction.

As shown in FIG. 10, the discharge end channel F14 of the stator cooling channel F10 and the end channels F24 and F25 of the housing cooling channel F20 respectively have axial channels F14a, F24a, and F25a extending leftward in the axial direction.

The supply end channel F13 of the stator cooling channel F10 includes an axial channel F13a extending in the axial direction toward the coil end accommodation channel F11 on the right side. In contrast, the discharge end channel F14 of the stator cooling channel F10 includes an axial channel F14a extending in the axial direction toward the coil end accommodation channel F12 on the left side.

Such a structure secures freedom in the positions of the open ends (pipe connecting portions) F13c and F14c of the end channels F13 and F14 in the axial direction. For example, if the axial channel F13a is shortened and the axial channel F14a is lengthened, the pipe connecting portions F13c and F14c can be formed closer to the housing cover portion 22 on the right side.

As shown in FIG. 10, the tangential direction channel F14b of the discharge end channel F14 is formed between the end channels F24 and F25 in the stator cooling channel F10. The discharge end channel F25 of the housing cooling channel F20 is formed in an area surrounded by the L-shaped discharge end channel F14. The supply end channel F24 of the housing cooling channel F20 is formed in an area surrounded by the axial channel F14a of the discharge end channel F14 and the tangential direction channel F13b of the supply end channel F13. In this manner, four end channels F13, F14, F24, and F25 are formed by using a small space in the housing protrusion 21h.

In the example shown in FIG. 10, all of the four end channels F13, F14, F24, and F25 are substantially L-shaped. Alternatively, only some of the end channel F13, F14, F24, and F25 may be substantially L-shaped. For example, only the end channels F13 and F14 of the stator cooling channel F10 may be formed in a substantially L-shape, and the end channels F24 and F25 of the housing cooling channel F20 may extend in a direction perpendicular to the axis Ax. For example, the end channels F24 and F25 may extend upwardly from the housing cover portions 22 and 23.

In the example shown in FIG. 10, the four open ends (pipe connecting portions) 13c, 14c, 24c, and 25c are formed on the front surface 21f or the rear surface 21g of the housing cylindrical portion 21. In this regard, the open ends 13c, 14c, 24c, and 25c may be formed on the front surface or the rear surface of the housing protrusions 22h and 23h of the housing cover portions 22 and 23.

As shown in FIG. 10, the four end channels F13, F14, F24, and F25 respectively have pipe connecting portions F13c, F14c, F24c, and F25c at their ends. As such, different coolants can be provided to the two systems of channels (stator cooling channel F10 and housing cooling channel F20). For example, cooling oil may be provided to the stator cooling channel F10 and cooling water may be provided to the housings cooling channel F20.

The same coolant may be provided to the stator cooling channel F10 and the housing cooling channel F20. In this case, for example, the supply end channel F13 of the stator cooling channel F10 and the supply end channel F24 of the housing cooling channel F20 may be connected inside the housing protrusion 21h. In this case, the supply end channels F13 and F24 may have a common open end (pipe connecting portion). Similarly, the discharge end channel F14 of the stator cooling channel F10 and the discharge end channel F25 of the housing cooling channel F20 may also be connected inside the housing protrusion 20c.

### [Terminal base]

As shown in FIG. 4, the electric motor 10 includes terminal bases 51 and 52 attached to the housing 20. The first terminal base 51 may be attached to the housing protrusion 21h formed in the housing cylindrical portion 21, for example. The second terminal base 52 may be attached to the housing protrusion 22h formed in the housing cover portion 22 on the right side, for example.

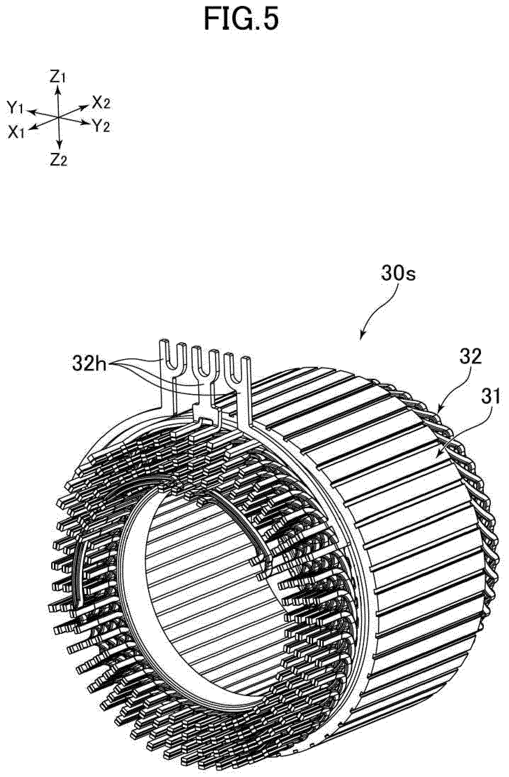

As shown in FIG. 11B, the first terminal base 51 is disposed inside the housing 20 (specifically, the coil end accommodation channel F11 described above). The electric wires 32u, 32v, and 32w of the coil 32 are fixed to the first terminal base 51. Three terminal conductors 53 (see FIG. 4), which extend from the inside of the housing 20 (coil end accommodation channel F11) toward the outside of the housing 20, are fixed to the second terminal base 52. These three terminal conductors 53 are fixed to the first terminal base 51 together with the terminal portions 32h (see FIGs. 5 and 11B) provided at the end portions of the electric wires 32u, 32v, and 32w. This allows the three terminal conductors 53 to electrically connect to the electric wires 32u, 32v, and 32w, respectively.

The first terminal base 51 is fixed to the right side surface 21a (see FIG. 11B) of the housing cylindrical portion 21 with a screw, for example. As shown in FIG. 5, the terminal portion 32h may extend from the coil end 32e in a direction perpendicular to the axis Ax, for example (upward in the example in FIG. 5). The terminal portion 32h is fixed to the first terminal base 51 with a bolt 51a and a nut 51b, for example. The first terminal base 51 may be formed of an insulator (e.g., resin). The bolt 51a may be fixed to the first terminal base 51 by insert-molding.

The second terminal base 52 may be fixed to the upper side of the housing cover portion 22 on the right side, for example. For example, as shown in FIG. 11B, an opening may be formed in the upper portion of the housing protrusion 22h of the housing cover portion 22. The second terminal base 52 may be fitted into the opening and fixed to the upper side of the housing protrusion 22h.

The second terminal base 52 may also be formed of an insulator (e.g., resin). The second terminal base 52 and the terminal conductor 53 may be formed by insert molding. As shown in FIG. 11B, the terminal conductors 53 may include an outer terminal portion 53b located outside the housing 20 (upper side of the housing 20) and held by the second terminal base 52, and an inner terminal portion 53a extending downward from the outer terminal portion 53b and located inside the housing 20 (coil end accommodation channel F11).

As shown in FIG. 11B, the inner terminal portion 53a of the terminal conductor 53 is fixed to the first terminal base 51 with the nut 51b together with the terminal portions 32h of the electric wires 32u, 32v, and 32w. The electric wires 32u, 32v, and 32w and the terminal conductor 53 are electrically connected to each other.

The structure for supporting the terminal bases 51 and 52 is not limited to the example shown in the drawings. For example, both the first terminal base 51 and the second terminal base 52 may be attached to the housing protrusion 21h of the housing cylindrical portion 21. In this case, the first terminal base 51 and the second terminal base 52 may be integrally formed.

As shown in FIG. 11B, the housing cover portion 22 on the right side has an opening 22m at a position in the axial position with respect to the first terminal base 51. A cover 22n for closing the opening 22m is attached to the housing cover portion 22. The user can fix the terminal conductor 53 and the terminal portions 32h of the electric wires 32u, 32v, and 32w to the first terminal base 51 (fastening the nut 51b and the bolt 51a) through the opening 22m.

### [Positional relationship between terminal base and end channel]

As described above, the stator cooling channel F10 has the end channel F13 (see FIG. 10) formed in the housing protrusion 21h. The end channel F13 may be a channel (supply end channel) for supplying coolant to the coil end accommodation channel F11 on the right side. As shown in FIG. 11B, the first terminal base 51 is located on one side in the axial direction with respect to the end channel F13 (on the right side in the axial direction in FIG. 11B). The first terminal base 51 is located radially outward of the coil 32. More specifically, the first terminal base 51 is located radially outward (upward) of the coil end 32e.

The first terminal base 51 has a part facing the stator cooling channel F10. Specifically, the left side surface 51c of the first terminal base 51 faces a channel from the end channel F13 toward the coil end 32e. In this regard, "the first terminal base 51 faces the stator cooling channel F10" means that at least a part of the first terminal base 51 is in contact with the coolant filled in the stator cooling channel F10.

Such an arrangement of the first terminal base 51 can prevent an increase in the distance between the axis Ax and the first terminal base 51, and thus the size of the electric motor 10 can be reduced.

The housing protrusion 21h includes a right side surface 21a facing the axial direction. As shown in FIG. 11B, the end channel F13 has an open end F13d formed on the right side surface 21a. The first terminal base 51 includes a part located on one side (specifically, the right side) in the axial direction with respect to the open end F13d. That is, as shown in FIG. 12B, when the housing protrusion 21h is viewed in the axial direction, at least a part of the open end F13d is disposed so as to overlap with the first terminal base 51.

With this structure, the distance from the axis Ax to the first terminal base 51 (height of the first terminal base 51) and the distance (height) from the axis Ax to the open end F13d are substantially the same. This serves to reduce the size of the electric motor 10.

A gap is provided between the open end F13d of the end channel F13 and the left side surface 51c of the first terminal base 51 so as to function as a part of the stator cooling channel F10. As shown in FIG. 11B, a recess 21k is formed on the right side surface 21a of the housing protrusion 21h. The open end F13d of the end channel F13 is formed inside of the recess 21k. The first terminal base 51 is fixed around the recess 21k. For example, as shown in FIG. 12B, the first terminal base 51 may be fixed around the recess 21k with the screw 51d.

The recess 21k provides a gap between the open end F13d and the left side surface 51c of the first terminal base 51, and can provide a channel from the open end F13d toward the coil end 32e.

The open end F13d is formed inside the recess 21k, and is thus located closer to the center in the axial direction than the right side surface 31c of the stator core 31. That is, the open end F13d is located radially outward of the stator core 31. The gap between the open end 13d and the first terminal base 51 is provided by such a recess 21k, and thus it is possible to prevent an increase in the size of the electric motor 10 in the axial direction.

As shown in FIG. 11B, the first terminal base 51 is disposed so as to close a part of the recess 21k and to open the other part. More specifically, the first terminal base 51 is disposed so as to close an upper area A1 (FIG. 12B) of the recess 21k and open a lower area A2 (FIG. 12B) of the recess 21k. This arrangement of the first terminal base 51 allows the coolant leaving the open end F13d to flow through the lower area A2 to the coil end 32e.

The lower area A2 is closer to the coil end 32e than the upper area A1. As such, the flow from the open end F13d toward the coil end 32e can be smoothed.

As shown in FIG. 11B, the first terminal base 51 is located radially outward of the coil end 32e. In other words, when the electric motor 10 is viewed in a direction perpendicular to the axis Ax, the first terminal base 51 and the coil end 32e overlap with each other. As a result, the first terminal base 51 guides the coolant toward the coil end 32e. More specifically, the coolant leaving the open end F13d is guided toward the base of the coil end 32e (a part closer to the stator core 31).

A conductor rod 32a functioning as the electric wires 32u, 32v, and 32w is bent in the coil end 32e and includes a part 32i (see FIG. 7) extending in the rotation direction. As shown in FIG. 11B, the position of the left side surface 51c (surface facing the open end F13d) of the first terminal base 51 in the axial direction may be the same as the part 32i or closer to the center of the electric motor 10 in the axial direction than the part 32i. Depending on the positional relationship between the first terminal base 51 and the coil end 32e, the first terminal base 51 guides the coolant to a part (base part) of the coil end 32e close to the stator core 31. As a result, the heat of the coil end 32e can be efficiently absorbed.

The width of the housing cylindrical portion 21 in the axial direction substantially corresponds to the width of the stator core 31 in the axial direction. As described above, the first terminal base 51 is attached to the right side surface 21a of the housing cylindrical portion 21. As such, the position of the left side surface 51c of the first terminal base 51 in the axial direction substantially coincides with the position of the right side surface 31c of the stator core 31. As a result, the first terminal base 51 can effectively guide the coolant toward the part of the coil end 32e close to the stator core 31.

The structure for securing the channel from the end channel F13 to the open end 13d to the coil end 32e is not limited to the example shown in FIG. 11B. For example, a protrusion may be formed on the left side surface 51c of the first terminal base 51. The protrusion may provide a gap between the left side surface 51c and the open end F13d. In this case, the recess 21k may not be formed on the right side surface 21a of the housing protrusion 21h. In contrast, a protrusion may be formed on the right side surface 21a of the housing protrusion 21h. The protrusion may support the left side surface 51c of the first terminal base 51. In this case as well, a gap can be provided between the left side surface 51c and the open end F13d.

In the example shown in FIG. 11B, the end channel F13 is a supply end channel that supplies coolant toward the coil end accommodation channel F11. Alternatively, the first terminal base 51 may be disposed so as to face the open end of the discharge end channel F14 (see FIG. 11A). In this case, the first terminal base 51 can guide the coolant from the left coil end 32f toward the end channel F14.

In the example shown in FIG. 11B, the coolant passes through below a lower edge 51d of the first terminal base 51 toward the coil end 32e. Alternatively, the first terminal base 51 may have a through-hole penetrating therethrough in the axial direction. In this case, the coolant from the open end F13d passes through the through-hole and flows into the coil end accommodation channel F11. At least the inner peripheral surface of the through-hole comes into contact with the coolant and faces the stator cooling channel F10.

### [Detail of stator]

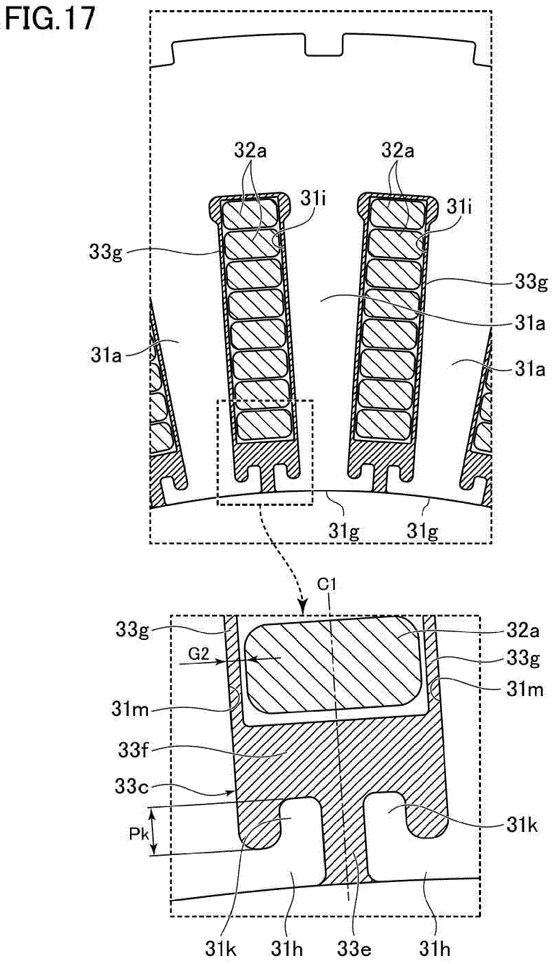

The stator core 31 includes a plurality of tooth portions h 31a (see FIG. 16) disposed in the rotation direction. As shown in FIG. 17, the tooth portion 31a has an facing surface 31g, which is an end surface facing the rotor 30r. In the electric motor 10, the rotor 30r is disposed inside the stator 30s. As such, each of the tooth portions 31a extends inward from the ring-shaped yoke portion 31b, and the stator core 31 has the facing surface 31g on the inner peripheral surface thereof.

As shown in FIG. 17, each of the tooth portions 31a has a first protrusion 31h including an facing surface 31g at its distal end. The first protrusion 31h protrudes from the end of the tooth portion 31a toward one side in the rotation direction (clockwise) and the other side in the rotation direction (counterclockwise). A slot 31i is formed between two adjacent tooth portions 31a. The first protrusion 31h is located closer to the center C1 of the slot 31i than the side surface 31m of the tooth portion 31a. The first protrusion 31h serves to increase the area of the facing surface 31g and can reduce the magnetoresistance between the stator core 31 and the rotor 30r.

As shown in FIG. 17, a slot 31i is formed between two adjacent tooth portions 31a. The coil 32 is disposed in the slot 31i. More specifically, a plurality of conductor rods 32a are disposed in the slot 31i. The conductor rods 32a are disposed in a row in the radial direction between two adjacent tooth portions 31a.

The arrangement and structure of the conductor rods 32a and the coils 32 are not limited to the example shown in FIG. 17. For example, the conductor rods 32a disposed between two adjacent tooth portions 31a may be disposed in a plurality of rows. Further, the conductor rods 32a may be disposed radially in the respective rows.

### [Filling portion of resin portion]

As shown in FIG. 17, a gap is formed between the ends of two adjacent tooth portions 31a. The stator 30s includes a resin portion 33. The resin portion 33 has a filling portion 33c between two adjacent tooth portions 31a. The filling portion 33c is located closer to the rotor 30r than the coil 32 (more specifically, conductor rod 32a). The filling portion 33c fills a gap between the ends of the two adjacent tooth portions 31a.

The filling portion 33c includes a part 33e between the first protrusions 31h formed at the distal end of the tooth portion 31a and a part 33f between the first protrusion 31h and the coil 32.

The coolant filled in the stator cooling channel F10 penetrates into the slot 31i. The filling portion 33c prevents such coolant from passing between two adjacent tooth portions 31a and entering the rotor housing chamber S3.

The stator core 31 and the resin portion 33 may be formed by insert molding, for example. That is, the stator core 31 may be disposed in the mold, and a molten resin, which is a material of the resin portion 33, may be supplied into the mold. At this time, the partition rings 34a and 34b (see FIG. 6) may also be fixed to the resin portion 33 by insert-molding together with the stator core 31 and the resin portion 33. Subsequently, conductor rods 32a may be inserted into each slot 31i.

### [Protrusion of stator core]

As shown in FIG. 17, each tooth portion 31a includes a second protrusion 31k in addition to the first protrusion 31h. The second protrusion 31k is located closer to the rotor 30r than the coil 32 (more specifically, conductor rod 32a). The second protrusion 31k is located radially inward of the conductor rod 32a.

As shown in FIG. 17, the second protrusion 31k may be a part protruding from the first protrusions 31h, for example. More specifically, the second protrusion 31k may be a part protruding radially outward from the distal end of the first protrusion 31h. The second protrusion 31k is a part forming a recess between a portion of the tooth portion 31a around the second protrusion 31k. In FIG. 17, a recess is formed between the second protrusion 31k and the side surface 31m of the tooth portion 31a.

When the filling portion 33c of the resin portion 33 and the tooth portion 31a are not in close contact with each other, the coolant passes between the filling portion 33c and the tooth portion 31a and enters the rotor housing chamber S3. In this regard, the second protrusion 31k is formed in the stator 30s in addition to the first convex portion 31h, and thus it is possible to effectively prevent the coolant from passing through the gap between the filling portion 33c and the tooth portion 31a.

As shown in FIG. 17, the second protrusion 31k is buried in the filling portion 33c. In other words, the filling portion 33c is formed on the entire outer surface of the second protrusion 31k. This structure can effectively prevent the coolant from passing through the gap between the filling portion 33c and the tooth portion 31a.

The second protrusion 31k is a part protruding from the tooth portion 31a, and thus it is possible to avoid the magnetic path from narrowing in the tooth portion 31a.

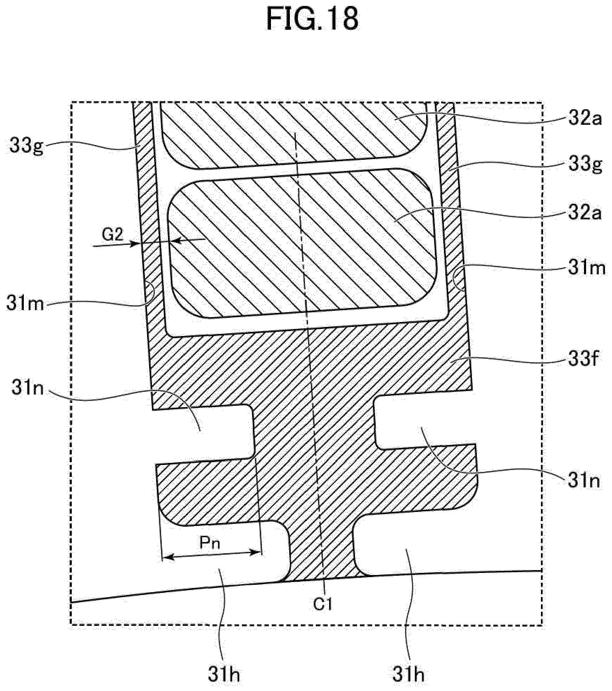

As shown in FIG. 17, a gap G2 is formed between the side surface 31m of the tooth portion 31a and the electric wire (conductor rod 32a in FIG. 18) of the coil 32. A protrusion amount Pk of the second protrusion 31k is preferably larger than the gap G2. This serves to effectively prevent the coolant from passing through the gap between the filling portion 33c and the tooth portion 31a.

The position of the conductor rod 32a may be shifted from the center C1 of the slot 31i in the rotation direction. In this case, the gap G2 may be half of the difference between the width of the conductor rod 32a in the rotation direction and the width of the slot 31i in the rotation direction.

The gap G2 may be different depending on the position of the conductor rod 32a. For example, the gap G2 may be gradually bigger in size radially outward. In this case, the protrusion amount Pk of the second protrusion 31k may be larger than the smallest gap G2. In other example, the protrusion Pk of the second protrusion 31k may be larger than the average of the gap G2.

The position of the second protrusion 31k is not limited to the example shown in FIG. 17. For example, in the example shown in FIG. 18, a second protrusion 31n is located radially outward of the first convex portion 31h. The second protrusion 31n protrudes from the side surface 31m of the tooth portion 31a toward the inside of the slot 31i in the rotation direction. The second protrusion 31n protrudes from the tooth portion 31a to one side in the rotation direction (clockwise) and the other side in the rotation direction (counterclockwise). The second protrusion 31n forms a recess with a part of the tooth portion 31a around the second protrusion 31n. Specifically, a recess is formed between the second protrusion 31n and the first protrusion 31h.

In the example shown in FIG. 18 as well, the protrusion amount Pn of the second protrusion 31n is preferably larger than the gap G2 formed between the side surface 31m of the tooth portion 31a and the conductor rod 32a. This structure can effectively prevent the coolant from passing through the gap between the filling portion 33c and the tooth portion 31a.

The second protrusions 31k and 31n shown in FIGs. 17 and 18 may extend toward the center C1 of the slot 31i in a direction inclined in both the rotation direction and the radial direction.

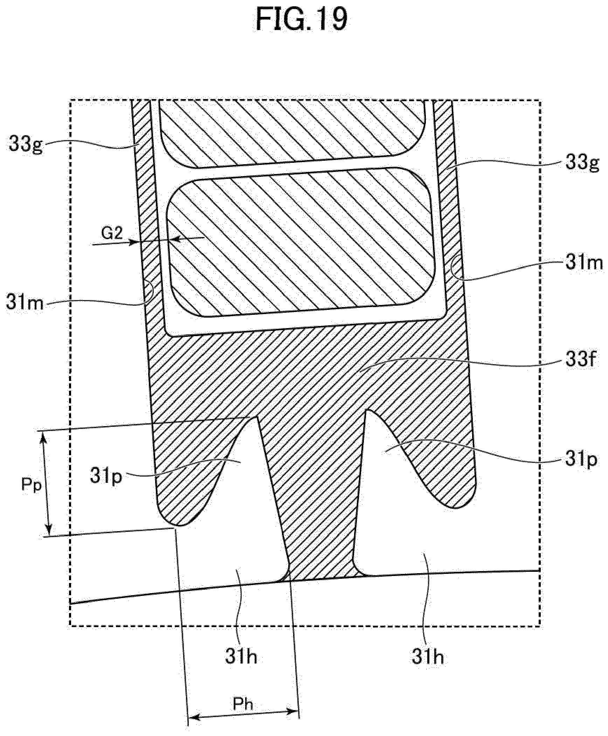

The second protrusion 31k and 31n shown in FIGs. 17 and 18 are rectangular, although the shape may be other shapes, such as a triangle. For example, as shown in FIG. 19, the second protrusion 31p is a triangle having substantially the same width as the protrusion amount Ph of the first protrusion 31h. Similarly to the examples in FIGs. 17 and 18, the protrusion amount Pp of the second protrusion 31p may be larger than the gap G2. The second protrusion 31p also forms a recess with a part of the tooth portion 31a around the second protrusion 31p. Specifically, a recess is formed between the second protrusion 31p and the side surface 31m of the tooth portion 31a.

The stator core 31 is formed of laminated steel sheets. In this case, each steel sheet includes parts constituting the tooth part 31a, the first protrusion 31h, and the second protrusion 31k (or 31n, 31p) described above. Two adjacent steel sheets may be bonded to each other. This prevents the coolant from entering between the two steel sheets.

The stator core 31 may be formed of soft magnetic iron powder (powder material). In this case, the protrusions 31h, 31k, 31n, and 31p may also be integrally formed with other parts of the stator core 31.

As shown in FIG. 17, the resin portion 33 may have an insulating layer 33g. The insulating layer 33g is formed on the inner surface of the slot 31i. The insulating layer 33g surrounds the entire conductor rods 32a disposed in the slot 31i. The insulating layer 33g insulates the coil 32 (conductor rod 32a) from the tooth portion 31a. The end portion of the insulating layer 33g (end portion close to the axis Ax) is preferably connected to the filling portion 33c. The insulating layer 33g may be integrally formed with other parts of the resin portion 33.

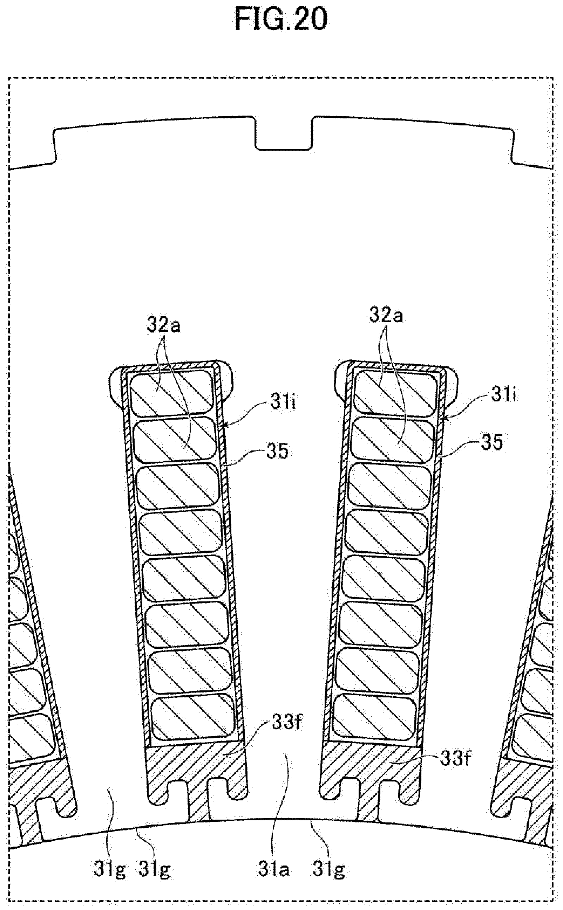

FIG. 20 is a diagram showing a modification of the insulating structure of the conductor rod 32a and the stator core 31. In FIG. 20, an insulating sheet 35 is disposed on the inner surface of the slot 31i. The insulating sheet 35 is formed separately from the resin portion 33. The insulating sheet 35 may surround the entire conductor rods 32a disposed in the slot 31i. The insulating sheet 35 insulates the coil 32 (conductor rod 32a) from the tooth portion 31a.

As shown in FIG. 11A, the resin portion 33 may have a ring-shaped flange portion 33i formed on the right side surface 31c of the stator core 31 and a ring-shaped flange portion 33j formed on the left side surface 31d of the stator core 31. The resin portion 33 may also have a cylindrical partition portions 33a and 33b extending from the flange portions 33i and 33j in the axial direction. The partition portions 33a and 33b may be integrally formed with other parts of the resin portion 33.

### [Conclusion]

(1) As described above, the first coil end accommodation channel F11 includes the stator cooling channel F10 defined inside an inner surface of the first housing cover portion 22. The housing cooling channel F20 includes a channel (axial channel F21 in the above example) formed in a housing cylindrical portion 21 and a channel (rotation direction channel F22 in the above example) formed in the first housing cover portion 22. According to the electric motor 10, coolant flowing in the first coil end accommodation channel F11 can be cooled by coolant flowing in the housing cooling channel F20 formed in the first housing cover portion 22.
(2) In the structure described in (1), the channel formed in the first housing cover portion 22 of the housing cooling channel F20 may be positioned outward of the first coil end accommodation channel F11 in the radial direction. With this structure, the coolant in the first coil end accommodation channel F11 can be cooled more effectively.
(3) In the electric motor according to (1) or (2), the first coil end accommodation channel F11 is formed around the axis, the channel formed in the first housing cover portion 22 of the housing cooling channel F20 is formed around the axis, is positioned outward of the coil end accommodation channel F11 in the radial direction, and surrounds the first coil end accommodation channel F11. With this structure, the coolant in the first coil end accommodation channel F11 can be cooled more effectively.
(4) In the electric motor 10 according to any one of (1) to (3), the channel formed in the first housing cover portion 22 of the housing cooling channel F20 may be positioned outward of the first coil end 32e of the coil 32 in the radial direction. This structure can prevent a distance between the coil 32 and the housing cooling channel F20 from being excessively long. As such, the heat of the coil 32 can be efficiently absorbed.
(5) In the electric motor 10 according to any one of (1) to (4), the housing 20 may include a second housing cover portion 23 disposed opposite to the first housing cover portion 22 in the axial direction. The stator cooling channel F10 may include a second coil end accommodation channel F23 accommodating a second coil end 32f disposed opposite to the first coil end 32e in the axial direction. The second coil end accommodation channel F23 may be defined inside an inner surface of the second housing cover portion 23. The housing cooling channel F20 may include a channel (rotation direction channel F23 in the above example) formed in the second housing cover portion 23. With this structure, the coolant flowing through the second coil end accommodation cannel F23 can be cooled by the coolant flowing though the housing cooling channel F20 formed in the second housing cover portion 23.
(6) In the electric motor 10 according to (5), the stator cooling channel F10 may include a connection channel F15 that connects the first coil end accommodation channel F11 with the second coil end accommodation channel F23. This structure enables to supply the coolant to one coil end accommodation channel F11 and discharge the coolant from the other coil end accommodation channel F12, for example.
(7) In the electric motor 10 according to (6), the housing 20 may include a housing protrusion 21h that protrudes outward from the housing cylindrical portion 21 in the radial direction. The stator cooling channel F10 may include a first end channel F11 and a second end channel F14, the first end channel F13 being formed in the housing protrusion 21h and supplying coolant to one of the first coil end accommodation channel F11 and the second coil end accommodation channel F23, the second end channel F14 being formed in the housing protrusion 21h and discharging coolant from the other one of the first coil end accommodation channel F11 and the second coil end accommodation channel F23. The connection channel F15 may be positioned opposite to the first end channel F13 and the second end channel F14 across a plane including the axis Ax. This structure can provide the coolant to the entire two coil end accommodation channels F11 and F12 in a well-balanced manner.
(8) In the electric motor according to (6), the connection channel F15 may be formed in the housing cylindrical portion 21. This structure eliminates the need to form a groove functioning as a channel in the stator core 31. As such, a width of a magnetic path in the stator core 31 can be sufficiently secured.
(9) In the electric motor 10 according to any one of (5) to (8), the first coil end accommodation channel F11 and the second coil end accommodation channel F23 may be formed around the axis. The channel formed in the first housing cover portion 22 of the housing cooling channel F20 may be formed around the axis Ax, positioned outward of the first coil end accommodation channel F11 in the radial direction, and surround the first coil end accommodation channel F11. The channel formed in the second housing cover portion 23 of the housing cooling channel F20 may be formed around the axis Ax, positioned outward of the second coil end accommodation channel F23 in the radial direction, and surround the second coil end accommodation channel F23. This structure can more effectively cool the coolant flowing through the first coil end accommodation channel F11 and the second coil end accommodation channel F12.
(10) In the electric motor 10 according to any one of (1) to (9), the housing cooling channel F20 may include, as the channel formed in the housing cylindrical portion 21, a plurality of axial channels F21 that are arranged in the rotation direction and each extend in the axial direction, The housing cooling channel F20 may include, as the channel formed in the first housing cover portion 22, a plurality of first rotation direction channels F22 that are arranged in the rotation direction. Each of the first rotation direction channels F22 may connect two axial channels F21 adjacent to each other. This structure serves to provide the coolant flowing through the housing cooling channel F20 in a wide range of the housing 20.
(11) In the electric motor 10 according to (10), the housing 20 may include a second housing cover portion 23 that is disposed opposite to the first housing cover portion 22 in the axial direction and attached to the housing cylindrical portion 21. The housing cooling channel F20 may include a plurality of second rotation direction channels F23 that are formed in the second housing cover portion 23 and arranged in the rotation direction, and each of the second rotation direction channels F23 may connect two axial channels F21 adjacent to each other. This structure serves to provide the coolant flowing through the housing cooling channel F20 in the entire housing 20.

### [Other examples]

The structure of the electric motor proposed in the present disclosure is not limited to the electric motor 10 described above.

In the electric motor 10, the coil end accommodation channel F11 on the right side and the coil end accommodation channel F12 on the left side are connected to each other via the connection channel F15. However, the structure of (1) may be applied to an electric motor in which the two coil end accommodation channels F11 and F12 are independent of each other. In this case, two supply channels for supplying the coolant to each of the coil end accommodation channels F11 and F12 and two discharge channels for discharging the coolant from each of the coil end accommodation channels F11 and F12 may be formed in the housing protrusion 20c.

## Claims

1. An electric motor (10) comprising:
a motor body (30) including a rotor (30r) that is rotatable around an axis (Ax) of the motor body (30) and a stator (30s) that is opposed to the rotor (30r) in a radial direction of the motor body (30), the stator (30s) including a coil (32), the coil (32) including a first coil end in an axial direction of the axis (Ax) of the motor body (30);
a housing (20) that houses the motor body (30);
a stator cooling channel (F10) that is defined inside an inner surface of the housing (20) and is filled with coolant, the stator cooling channel (F10) including a first coil end accommodation channel (F11) that accommodates the first coil end; and
a housing cooling channel (F20) that includes a channel formed between the inner surface and an outer surface of the housing (20) and is filled with coolant, wherein
the housing (20) includes a housing cylindrical portion (21) positioned outward of the motor body (30) in the radial direction and a first housing cover portion (22) disposed on one side in the axial direction with respect to the motor body (30),
the first coil end accommodation channel (F11) is defined inside an inner surface (22e) of the first housing cover portion (22), and
the housing cooling channel (F20) includes a channel (F21) formed in the housing cylindrical portion (21) and a channel (F22) formed in the first housing cover portion (22).

2. The electric motor (10) according to claim 1, wherein the channel (F22) formed in the first housing cover portion (22) of the housing cooling channel (F20) is positioned outward of the first coil end accommodation channel (F11) in the radial direction.

3. The electric motor (10) according to claim 2, wherein the first coil end accommodation channel (F11) is formed around the axis (Ax),
the channel (F22) formed in the first housing cover portion (22) of the housing cooling channel (F20) is formed around the axis (Ax), is positioned outward of the first coil end accommodation channel (F11) in the radial direction, and surrounds the first coil end accommodation channel (F11).

4. The electric motor (10) according to claims 2 or 3, wherein the channel (F22) formed in the first housing cover portion (22) of the housing cooling channel (F20) is positioned outward of the first coil end of the coil (32) in the radial direction.

5. The electric motor (10) according to any one of claims 1 to 4, wherein the coil (32) includes a second coil end disposed opposite to the first coil end in the axial direction, the housing (20) includes a second housing cover portion (23) disposed opposite to the first housing cover portion (22) in the axial direction,
the stator cooling channel (F10) includes a second coil end accommodation channel (F12) accommodating the second coil end,
the second coil end accommodation channel (F12) is defined inside an inner surface (23e) of the second housing cover portion (23), and
the housing cooling channel (F20) includes a channel (F23) formed in the second housing cover portion (23).

6. The electric motor (10) according to claim 5, wherein the stator cooling channel (F10) includes a connection channel (F15) that connects the first coil end accommodation channel (F11) with the second coil end accommodation channel (F12).

7. The electric motor (10) according to claim 6, wherein the housing (20) includes a housing protrusion (21h) that protrudes outward from the housing cylindrical portion (21) in the radial direction,
the stator cooling channel (F10) includes a first end channel (F13) and a second end channel (F14), the first end channel (F13) being formed in the housing protrusion (21h) and configured to supply coolant to one of the first coil end accommodation channel (F11) and the second coil end accommodation channel (F12), the second end channel (F14) being formed in the housing protrusion (21h) and configured to discharge coolant from the other one of the first coil end accommodation channel (F11) and the second coil end accommodation channel (F12), and
the connection channel (F15) is positioned opposite to the first end channel (F13) and the second end channel (F14) across a plane (P1) including the axis (Ax).

8. The electric motor (10) according to claims 6 or 7, wherein the connection channel (F15) is formed in the housing cylindrical portion (21).

9. The electric motor (10) according to any one of claims 5 to 8, wherein the first coil end accommodation channel (F11) and the second coil end accommodation channel (F12) are formed around the axis (Ax),
the channel (F22) formed in the first housing cover portion (22) of the housing cooling channel (F20) is formed around the axis (Ax), is positioned outward of the first coil end accommodation channel (F11) in the radial direction, and surrounds the first coil end accommodation channel (F11),
the channel (F23) formed in the second housing cover portion (23) of the housing cooling channel (F20) is formed around the axis (Ax), is positioned outward of the second coil end accommodation channel (F12) in the radial direction, and surrounds the second coil end accommodation channel (F12).

10. The electric motor (10) according to any one of claims 1 to 9, wherein the housing cooling channel (F20) includes, as the channel formed in the housing cylindrical portion (21), a plurality of axial channels (F21) that are arranged in a rotation direction of the rotor (30r) and each extend in the axial direction,
the housing cooling channel (F20) includes, as the channel formed in the first housing cover portion (22), a plurality of first rotation direction channels (F22) that are arranged in the rotation direction of the rotor (30r), and
each of the first rotation direction channels (F22) connects two axial channels (F21) adjacent to each other.

11. The electric motor (10) according to claim 10, wherein the housing (20) includes a second housing cover portion (23) that is disposed opposite to the first housing cover portion (22) in the axial direction and attached to the housing cylindrical portion (21), the housing cooling channel (F20) includes a plurality of second rotation direction channels (F23) that are formed in the second housing cover portion (23) and arranged in the rotation direction of the rotor (30r), and
each of the second rotation direction channels (F23) connects two axial channels (21) adjacent to each other.
